(19) 

**Europäisches Patentamt**
**European Patent Office**
**Office européen des brevets**

(11) **EP 4 502 651 A1**

(12) **EUROPEAN PATENT APPLICATION**

(43) Date of publication:
**05.02.2025 Bulletin 2025/06**

(21) Application number: **24184090.9**

(22) Date of filing: **24.06.2024**

(51) International Patent Classification (IPC):
**G01S 7/481** (2006.01)    **G01S 7/4861** (2020.01)
**G01S 7/4863** (2020.01)    **G01S 7/4865** (2020.01)
**G01S 17/00** (2020.01)    **G01S 17/10** (2020.01)
**G01S 17/42** (2006.01)    **G01S 17/894** (2020.01)
**G01S 17/931** (2020.01)

(52) Cooperative Patent Classification (CPC):
**G01S 7/4812; G01S 7/4815; G01S 7/4816;**
**G01S 7/4817; G01S 7/4861; G01S 7/4863;**
**G01S 7/4865; G01S 17/003; G01S 17/10;**
**G01S 17/42;** G01S 17/894; G01S 17/931

(84) Designated Contracting States:
**AL AT BE BG CH CY CZ DE DK EE ES FI FR GB**
**GR HR HU IE IS IT LI LT LU LV MC ME MK MT NL**
**NO PL PT RO RS SE SI SK SM TR**
Designated Extension States:
**BA**
Designated Validation States:
**GE KH MA MD TN**

(30) Priority: **31.07.2023 US 202318362218**

(71) Applicant: **Allegro MicroSystems, LLC**
**Manchester, NH 03103 (US)**

(72) Inventors:
• **Huntingdon, Andrew S.**
 **Banks, 97106 (US)**
• **Lee, Adam**
 **Portland, 97229 (US)**
• **Munroe, Michael James**
 **Portland, 97201 (US)**
• **Talaga, Ronald**
 **West Linn, 97068 (US)**

(74) Representative: **South, Nicholas Geoffrey et al**
**Venner Shipley LLP**
**200 Aldersgate**
**London EC1A 4HD (GB)**

(54) **WIDE-DYNAMIC-RANGE SPLIT-DETECTOR LIDAR PHOTORECEIVER**

(57)    Split-detector lidar photoreceivers are described which utilize range-dependent focus to transition from illuminating two detector elements with returns from near targets, within a close-range threshold distance, to illuminating just one detector element for all other returns. In some examples, a split-detector can have or include a "bullseye" (concentric) detector configuration. Because two separate detector elements with separate amplifier chains are used, one channel can be optimized for the strong t0 and near-target returns, while another channel can be optimized and used for all other returns.

*FIG. 1*

**Description**

**BACKGROUND**

One type of light detection and ranging (lidar) system relies on the times-of-flight of laser pulses traveling between the system and objects or surfaces at locations remote from the lidar system to determine distances to those objects or surfaces. In operation of such a system, laser pulses are transmitted to and reflected from distant objects and surfaces, with a portion of each reflected pulse returning to the lidar system ("pulse returns") where they are detected by an optical detector. A timing system determines the times-of-flight of the pulse returns and thus the distances to the distant objects and surfaces based on the speed of light. Lidar is commonly used for surveying areas of interest and can be used, depending on applications, over long distances, e.g., satellite-based lidar used for ground mapping. Lidar has also become more prevalent in automotive applications, e.g., as part of advanced driver assistance systems (ADAS) or autonomous driving (AD) systems.

Lidar systems can use a single laser or multiple lasers to transmit pulses, and single or multiple detectors for sensing and timing the pulse returns. A lidar system's field-of-regard (FOR) is the portion of a scene that it can sense over multiple observations, whereas its field-of-view (FOV) is the portion of the scene that its detectors can sense in a single observation. Depending on type of lidar system, the FOV of its detectors may be scanned over its FOR over multiple observations (scanned lidar), or in a "staring" system the detector FOV may match the FOR, potentially updating the scene image with every observation. However, during a single observation, a lidar system can only sense the parts of its detector FOV that are illuminated by its laser. The area of the scene illuminated by a single laser pulse may be scanned over the detector FOV, necessitating multiple observations to image the part of the scene within that FOV, or it may be matched to the detector FOV ("flash lidar") and either scanned along with the FOV over a larger FOR, or it may illuminate the entire FOR in a staring flash lidar system. These lidar system architectures differ with respect to how much laser energy per pulse is needed, how fast the laser must pulse, and how rapidly a three-dimensional image of a given FOR can be collected.

In scanned lidar systems, the returns collected by each detector of the sensor (each constituting a point in the FOR) are aggregated over multiple laser shots to build up a "point cloud" in three-dimensional space that maps the topography of the scene. In staring flash lidar systems a complete point cloud is collected with every laser shot. Lidar system architecture with respect to scanning versus staring detectors and scanning versus flash illumination are driven by issues such as the required angular span and resolution of the scene to be imaged, the available power and achievable pulse repetition frequency of the laser, the range over which the lidar system must be effective, and the desired image update rate, among many other factors. Often it is impractical to supply sufficient laser pulse energy per pixel to implement long-range flash lidar in a high-resolution staring system, whereas illuminating too small of a FOV limits the image update rate of high-resolution, wide-FOR scanned lidar systems. Lidar systems that match sensor FOV and laser illumination to the full FOR along one axis of the scene, such as angle-of-elevation, while scanning across the FOR along the other axis, such as azimuthal angle, provide an engineering compromise that limits required laser power while supporting high image resolution and update rates.

Laser transmit optics used in lidar sensors that scan laser and detector FOV together project a laser spot that overlaps the portion of the scene viewed by the pixels of the sensor array, i.e., the sensor's field-of-view (FOV). Each pixel of the sensor array views a solid angle within the FOV called its instantaneous field-of-view (IFOV).

A common feature of many lidar systems is that they employ optics of fixed focus. That means the image of the laser spot projected by the system is sharpest (i.e., it is smallest at the system's detector) for a particular target range, and it blurs (i.e., gets larger at the system's detector) for targets at shorter or longer range than that in-focus range. Often optics are selected that focus at a point in the middle of a system's intended effective range because then laser spot blurring is minor over much of the range, and only becomes large for targets very near the lidar system.

Lidar systems typically contend with optical signal levels that span a very wide dynamic range. In particular, signal returns from close objects are very intense, and even when the best anti-reflection coatings are used, the return from the system's own transmit optics (hereafter the "t0" return) is typically strong enough to saturate any photoreceiver that is sensitive enough to detect the weak signals returned by targets at long range. Signal returns from near targets may not be detected if they occur during the time it takes for a photoreceiver to settle following saturation from the t0 return.

**SUMMARY**

Aspects of the present disclosure are directed to wide-dynamic-range split-detector lidar photoreceivers and related components and methods.

One general aspect of the present disclosure is directed to and includes a split-detector photoreceiver configured to receive a lidar return from a target within an instantaneous field-of-view (IFOV). The split-detector photoreceiver may include: a primary detector configured to detect the lidar return and produce a corresponding output signal, where for a target beyond a close-range threshold distance from the photoreceiver, the spot image is within an optically-sensitive area of the primary detector; primary-detector supporting circuitry configured to receive the output signal from the primary detector and provide amplification for the output signal, where the primary-detector supporting circuitry has a first recovery time for recovering from saturation; a secondary detector configured to detect a portion of the lidar return from a target within the close-range threshold distance and produce a corresponding output signal; and secondary-detector supporting circuitry configured to receive the output signal from the secondary detector and provide amplification for the output signal, where the secondary-detector supporting circuitry has a second recovery time for recovering from saturation, where the second recovery time is less than the first recovery time. Other embodiments of this aspect include corresponding computer systems, apparatus, and computer programs recorded on one or more computer storage devices, each configured to perform the actions of the methods.

Implementations may include one or more of the following features. For the photoreceiver, the second recovery time of the secondary-detector supporting circuitry can be less than a lidar signal round-trip time of flight (TOF) between the photoreceiver and a target at the close-range threshold distance. The primary-detector supporting circuitry may include a first transimpedance amplifier (TIA) having a first gain and the secondary-detector supporting circuitry may include a second transimpedance amplifier (TIA) having a second gain. The first gain can be greater than the second gain. The first TIA can have a first bandwidth and the second TIA can have a second bandwidth. The first bandwidth can be less than the second bandwidth. The primary-detector supporting circuitry may include a first clamping structure and the secondary-detector supporting circuitry may include a second clamping structure. The first clamping structure may be smaller than the second clamping structure. The primary detector may be enclosed by the secondary detector. The primary detector may be partially enclosed by the secondary detector. The secondary detector may be adjacent to the primary detector and positioned to reduce reception of light originating outside the IFOV corresponding to the photoreceiver. The primary detector may include a circular shape and the secondary detector may include an annulus centered on the primary detector. The primary detector may include a circular shape and the secondary detector may include an annulus sector centered on the primary detector. The primary detector may include an avalanche photodiode (APD). The APD may include indium gallium arsenide (InGaAs).

A photoreceiver array may include a plurality of split-detector photoreceivers configured to receive a plurality of lidar returns from a plurality of instantaneous fields-of-view (IFOV). The primary detector of each photoreceiver can be enclosed by the secondary detector. The primary detector of each photoreceiver is partially enclosed by the associated secondary detector. The secondary detector of each photoreceiver may be adjacent to the primary detector and positioned to reduce reception of light originating outside that photoreceiver's corresponding IFOV. The photoreceiver array may include a one-dimensional (1D) array. The photoreceiver array may include a two-dimensional (2D) array. The primary detector of one or more of the plurality of split-detector photoreceivers may include an avalanche photodiodes (APD). The APD may include an indium gallium arsenide (InGaAs) APD. The close-range threshold distance can be (selected or designed to be), e.g., about 5 meters. The primary-detector supporting circuitry and/or secondary-detector supporting circuitry may include or be part of a readout integrated circuit (ROIC). The primary-detector supporting circuitry and/or secondary-detector supporting circuitry may include or be part of an application specific integrated circuit (ASIC). The photoreceiver may include a multiplexer configured to combine a first output from the primary-detector supporting circuitry with a second output of the secondary-detector supporting circuitry.

Another general aspect of the present disclosure is directed to and includes a system including: one or more optics configured to receive one or more lidar returns, where the one or more optics have a focal distance and are configured to focus a lidar return from a target, within an instantaneous field of view (IFOV) and at the focal distance, as a lidar return image onto an image plane; and a split-detector photoreceiver configured to receive a lidar return from a target within an instantaneous field-of-view (IFOV), the lidar return having a spot image on the photoreceiver, the photoreceiver including a primary detector configured at the image plane to receive the lidar return and produce a corresponding output signal, where for a target beyond a close-range threshold distance from the split-detector photoreceiver, the lidar return image is formed within an optically-sensitive area of the primary detector; primary-detector supporting circuitry configured to receive the output signal from the primary detector and provide amplification for the output signal, where the primary-detector supporting circuitry has a first recovery time for recovering from saturation; a secondary detector configured to detect a portion of the lidar return from a target closer than the close-range threshold distance and to produce a corresponding output signal; and secondary-detector supporting circuitry configured to receive the output signal from the secondary detector and provide amplification for the output signal, where the secondary-detector supporting circuitry has a second recovery time for recovering from saturation, where the second recovery time is less than the first recovery time.

Implementations may include one or more of the following features. For the system, the second recovery time of the secondary-detector supporting circuitry can be less than a round-trip time of flight (TOF) of a lidar signal between the photoreceiver and a target at the close-range threshold distance. The primary-detector supporting circuitry may include a first transimpedance amplifier (TIA) having a first gain and the secondary-detector supporting circuitry may include a second transimpedance amplifier (TIA) having a second gain. The first gain may be greater than the second gain. The first TIA may have a first bandwidth and the second TIA may have a second bandwidth. The first bandwidth can be less than the second bandwidth. The primary-detector supporting circuitry may include a first clamping structure and the secondary-detector supporting circuitry may include a second clamping structure. The first clamping structure may be smaller than the second clamping structure. The one or more optics may include one or more optics configured to transmit a lidar signal corresponding to the lidar return. The second recovery time of the secondary-detector supporting circuitry following reception of a partial reflection of the lidar signal from the one or more optics can be less than a time of flight (TOF) between the photoreceiver and a target at a minimum desired effective range of the split-detector photoreceiver. The primary detector may include a circular shape. The primary detector may include a photodiode. Each split-detector photoreceiver can have a corresponding IFOV, and the array can be configured to receive a plurality of lidar returns from a plurality of IFOV. The primary detector of each photoreceiver can be enclosed by the respective secondary detector. The primary detector of each photoreceiver can be partially enclosed by the respective secondary detector. The secondary detector of each photoreceiver may be adjacent to the respective primary detector and positioned to reduce reception of light originating outside the IFOV corresponding to the photoreceiver. The array may include a one-dimensional (1D) array. The array may include a two-dimensional (2D) array. The primary detector of one or more of the plurality of split-detector photoreceivers may include an avalanche photodiode (APD). The APD may include indium gallium arsenide (InGaAs). An optical path of the one or more optics may include a monostatic configuration with a transmit optical path of an outgoing lidar signal in common with a receive optical path of an incoming lidar return. An optical path of the one or more optics may include a bistatic configuration with a transmit optical path of an outgoing lidar signal that is separate from a receive optical path of an incoming lidar return. The primary detector and secondary detector can be configured to detect lidar returns from one or more targets over a range from a minimum desired effective range that is close to the one or more optics, to a maximum desired effective range at or greater than the focal distance of the one or more optics. The system may include a multiplexer configured to combine a first output from the primary-detector supporting circuitry with a second output of the secondary-detector supporting circuitry.

A further general aspect of the present disclosure is directed to and includes a method of making a split-detector photoreceiver configured to receive a lidar return from a target within an instantaneous field-of-view (IFOV). The method can include: (A) providing a primary detector configured to detect the lidar return and produce a corresponding output signal, where for a target beyond a close-range threshold distance from the photoreceiver the spot image is within an optically-sensitive area of the primary detector; (B) providing primary-detector supporting circuitry configured to receive the output signal from the primary detector and provide amplification for the output signal, where the primary-detector supporting circuitry has a first recovery time for recovering from saturation; (C) providing a secondary detector configured to detect a portion of the lidar return from a target within the close-range threshold distance and produce a corresponding output signal; and (D) providing secondary-detector supporting circuitry configured to receive the output signal from the secondary detector and provide amplification for the output signal, where the secondary-detector supporting circuitry has a second recovery time for recovering from saturation, where the second recovery time is less than the first recovery time.

Implementations may include one or more of the following features. The method may include providing one or more optics configured to receive a lidar return, where the one or more optics have a focal distance and are configured to focus the lidar return from a target at the focal distance onto an image plane, where the primary detector is disposed at the image plane. The primary detector may include an avalanche photodiode (APD). The method can include forming an array of split-detector photoreceivers. Each repeated set of steps (A)-(D) can produce an additional split-detector photoreceiver having a respective IFOV, where the array of split-detector photoreceivers is configured to receive a plurality of lidar returns from a plurality of respective instantaneous fields-of-view (IFOV). The primary-detector supporting circuitry and/or secondary-detector supporting circuitry may include an application-specific integrated circuit (ASIC) or a read-out integrated circuit (ROIC).

For some embodiments of the present disclosure, a system of one or more computers can be configured to perform particular operations or actions, as described herein, by virtue of having software, firmware, hardware, or a combination of them installed on the system that in operation causes or cause the system to perform the actions. One or more computer programs can be configured to perform particular operations or actions by virtue of including instructions that, when executed by data processing apparatus, cause the apparatus to perform the actions.

The features and advantages described herein are not all-inclusive; many additional features and advantages will be apparent to one of ordinary skill in the art in view of the drawings, specification, and claims. Moreover, it should be noted that the language used in the specification has been selected principally for readability and instructional purposes, and not to limit in any way the scope of the inventive subject matter. The subject technology is susceptible of many embodiments. What follows is illustrative, but not exhaustive, of the scope of the subject technology.

**BRIEF DESCRIPTION OF THE DRAWINGS**

The manner and process of making and using the disclosed embodiments may be appreciated by reference to the figures of the accompanying drawings. It should be appreciated that the components and structures illustrated in the figures are not necessarily to scale, emphasis instead being placed upon illustrating the principles of the concepts described herein. Like reference numerals designate corresponding parts throughout the different views; though similar parts or components may be referenced by different numerals in different drawing figures. Furthermore, embodiments are illustrated by way of example and not limitation in the figures, in which:

Fig. 1 is a block diagram showing major components of an example embodiment of a scanned lidar system with a split-detector photoreceiver, in accordance with the present disclosure;

Fig. 2 is a block diagram of an example a split-detector lidar photoreceiver with supporting circuity, in accordance with an embodiment of the present disclosure;

Fig. 3 is a plot showing signal v. range, in accordance with embodiments of the present disclosure;

Fig. 4 is a diagram of an example photoreceiver, in accordance with the present disclosure;

Fig. 5 is a diagram of signal power v. time for lidar returns overlaid with corresponding TIA output voltages, in accordance with embodiments of the present disclosure;

Fig. 6 is a diagram showing the "time-zero" problem for short-range detection, in accordance with embodiments of the present disclosure;

Fig. 7 is a diagram of signal power v. time for t0 and near target returns overlaid with corresponding TIA output voltages, in accordance with embodiments of the present disclosure;

Fig. 8 is a diagram depicting an imaging systems and the circle of confusion for image spots of targets at various distances with respect to a lens and image plane, in accordance with an embodiment of the present disclosure;

Figs. 9A-9B are graphs of a circle-of-confusion v. range for different ranges, respectively, in accordance with a further embodiment of the present disclosure;

Figs. 10A-10B are graphs of a circle of least confusion (COLC) at different ranges, respectively, in accordance with a further embodiment of the present disclosure;

Fig. 11 is a diagram of an example split-detector photoreceiver, in accordance with embodiments of the present disclosure;

Fig. 12 is diagram showing an example lidar system employing a split-detector photoreceiver, in accordance with a further embodiment of the present disclosure;

Figs. 13A-13B are diagrams showing a split-detector photoreceiver configuration illustrating tolerance of split-detector photoreceivers to misalignment and distortion, respectively, in accordance with embodiments the present disclosure;

Figs. 14A-B are diagrams showing split-detector photoreceivers having non-annular secondary detector elements, in accordance with embodiments of the present disclosure;

Fig. 15 is a diagram of an example split-detector lidar photoreceiver, in accordance with an embodiment of the present disclosure;

Fig. 16 is a diagram showing an example split-detector lidar photoreceiver with supporting circuitry and combined signal paths, in accordance with an embodiment of the present disclosure;

Fig. 17 is a diagram showing an example multiplexing scheme for combining near and far signal paths, in accordance with a further embodiment of the present disclosure;

Fig. 18 is a diagram showing an example multiplexing scheme for combining near and far signal paths using encoding, in accordance with a further embodiment of the present disclosure;

Fig. 19 is a block diagram depicting an example method of making a split-detector lidar photoreceiver, in accordance with embodiments of the present disclosure; and

Fig. 20 is a schematic diagram of an example computer system that can perform all or at least a portion of methods, algorithms, and processing, in accordance with the present disclosure.

## DETAILED DESCRIPTION

Prior to describing example embodiments of the disclosure some information is provided. Laser ranging systems can include laser radar (ladar), light-detection and ranging (lidar), and range finding systems, which are generic terms for the same class of instrument that uses light to measure the distance to objects in a scene. This concept is similar to radar, except optical signals are used instead of radio waves. Similar to radar, a laser ranging and imaging system emits a pulse toward a particular location and measures the optical "echoes" (a.k.a., "returns") to extract the range.

Laser ranging systems generally work by emitting a laser pulse and recording the time it takes for the laser pulse to travel to a target, reflect, and return to a photoreceiver, which time is commonly referred to as the "time of flight" or "TOF." The laser ranging instrument records the time of the outgoing pulse-either from a trigger or from calculations that use measurements of the scatter from the outgoing laser light-and then records the time that a laser pulse returns. The difference between these two times is the time of flight (TOF) to and from the target. Using the speed of light, the round-trip time of the pulses is used to calculate the distance to the target.

Lidar systems may scan the beam (or, successive pulses) across a target area to measure the distance to multiple points across the field of view, producing a full three-dimensional range profile of the surroundings. More advanced flash lidar cameras, for example, contain an array of detector elements, each able to record the time of flight to objects in their field of view.

When using light pulses to create images, the emitted pulse may intercept multiple objects, at different orientations, as the pulse traverses a 3D volume of space. The echoed laser-pulse waveform contains a temporal and amplitude imprint of the scene. By sampling the light echoes, a record of the interactions of the emitted pulse is extracted with the intercepted objects of the scene, allowing an accurate multi-dimensional image to be created. To simplify signal processing and reduce data storage, laser ranging and imaging can be dedicated to discrete-return systems, which record only the time of flight (TOF) of the first, or a few, individual target returns to obtain angle-angle-range images. In a discrete-return system, each recorded return corresponds, in principle, to an individual laser reflection (i.e., an echo from one particular reflecting surface, for example, a tree, pole or building). By recording just a few individual ranges, discrete-return systems simplify signal processing and reduce data storage, but they do so at the expense of lost target and scene reflectivity data.

Because laser-pulse energy has significant associated costs and drives system size and weight, recording the TOF and pulse amplitude of more than one laser pulse return per transmitted pulse, to obtain angle-angle-range-intensity images, increases the amount of captured information per unit of pulse energy. All other things equal, capturing the full pulse return waveform offers significant advantages, such that the maximum data is extracted from the investment in average laser power. In full-waveform systems, each backscattered laser pulse received by the system is digitized at a high sampling rate (e.g., 500 MHz to 1.5 GHz). This process generates digitized waveforms (amplitude versus time) that may be processed to achieve higher-fidelity 3D images.

Of the various laser ranging instruments available, those with single-element photoreceivers generally obtain range data along a single range vector, at a fixed pointing angle. This type of instrument-which is, for example, commonly used by golfers and hunters-either obtains the range (R) to one or more targets along a single pointing angle or obtains the range and reflected pulse intensity (I) of one or more objects along a single pointing angle, resulting in the collection of pulse range-intensity data, $(R, I)_i$, where i indicates the number of pulse returns captured for each outgoing laser pulse.

More generally, laser ranging instruments can collect ranging data over a portion of the solid angles of a sphere, defined by two angular coordinates (e.g., azimuth and elevation), which can be calibrated to three-dimensional (3D) rectilinear cartesian coordinate grids; these systems are generally referred to as 3D lidar and ladar instruments. The terms "lidar" and "ladar" are often used synonymously and, for the purposes of this discussion, the terms "3D lidar," "scanned lidar," or "lidar" are used to refer to these systems without loss of generality. Three-dimensional (3D) lidar instruments obtain three-dimensional (e.g., angle, angle, range) data sets. Conceptually, this would be equivalent to using a rangefinder and scanning it across a scene, capturing the range of objects in the scene to create a multi-dimensional image. When only the range is captured from the return laser pulses, these instruments obtain a 3D data set (e.g., (angle, angle, range)$_n$), where the index n is used to reflect that a series of range-resolved laser pulse returns can be collected, not just the first reflection.

Some 3D lidar instruments are also capable of collecting the intensity of the reflected pulse returns generated by the objects located at the resolved (angle, angle, range) objects in the scene. When both the range and intensity are recorded, a multi-dimensional data set (e.g., angle, angle, (range-intensity)$_n$) can be obtained. This is analogous to a video camera in which, for each instantaneous field of view (FOV), each effective camera pixel captures both the color and intensity of the scene observed through the lens. However, 3D lidar systems, instead capture the range to the object and the reflected pulse intensity.

Lidar systems can include different types of lasers operating at different wavelengths, including those that are not visible (e.g., wavelengths of 840 nm or 905 nm), in the near-infrared (e.g., at wavelengths of 1064 nm or 1550 nm), and in the thermal infrared including wavelengths known as the "eye-safe" spectral region (generally those beyond 1300 nm), where ocular damage is less likely to occur. Lidar transmitters produce emissions (laser outputs) that are generally invisible to the human eye. However, when the wavelength of the laser is close to the range of sensitivity of the human eye- the "visible" spectrum, or roughly 350 nm to 730 nm-the energy of the laser pulse and/or the average power of the laser must be lowered to avoid causing ocular damage. Certain industry standards and/or government regulations define "eye safe" energy density or power levels for laser emissions, including those at which lidar systems typically operate. For example, industry-standard safety regulations IEC 60825-1: 2014 and/or ANSI Z136.1-2014 define maximum power levels for laser emissions to be considered "eye safe" under all conditions of normal operation (a.k.a., "Class 1"), including for different lidar wavelengths of operation. The power limits for eye safe use vary according to wavelength due to absorption characteristics of the structure of the human eye. For example, because the aqueous humor and lens of the human eye readily absorb energy at 1550 nm, little energy reaches the retina at that wavelength. Comparatively little energy is absorbed, however, by the aqueous humor and lens at 840 nm or 905 nm, meaning that most incident energy at that wavelength reaches and can damage the retina. Thus, a laser operating at, for example, 1550 nm, can-without causing ocular damage-generally have 200 times to 1 million times more laser pulse energy than a laser operating at 840 nm or 905 nm.

One challenge for a lidar system is detecting poorly reflective objects at long distance, which requires transmitting a laser pulse with enough energy that the return signal-reflected from the distant target-is of sufficient magnitude to be detected. To determine the minimum required laser transmission power, several factors must be considered. For instance, the magnitude of the pulse returns scattering from the diffuse objects in a scene is proportional to their range and the intensity of the return pulses generally scales with distance according to $1/R^4$ for small objects and $1/R^2$ for larger objects; yet, for highly-specularly reflecting objects (i.e., those objects that are not diffusively-scattering objects), the collimated laser beams can be directly reflected back, largely unattenuated. This means that-if the laser pulse is transmitted, then reflected from a target 1 meter away-it is possible that the full energy (J) from the laser pulse will be reflected into the photoreceiver; but-if the laser pulse is transmitted, then reflected from a target 333 meters away-it is possible that the return will have a pulse with energy approximately $10^{12}$ weaker than the transmitted energy. To provide an indication of the magnitude of this scale, the 12 orders of magnitude ($10^{12}$) is roughly the equivalent of the number of inches from the Earth to the Sun.

In many cases of lidar systems highly sensitive photoreceivers are used to increase the system sensitivity to reduce the amount of laser pulse energy that is needed to reach poorly reflective targets at the longest distances required, and to maintain eye-safe operation. Some variants of these detectors include those that incorporate photodiodes, and/or offer gain, such as avalanche photodiodes (APDs) or single-photon avalanche detectors (SPADs). These variants can be configured as single-element detectors,-segmented-detectors, linear detector arrays, or area detector arrays. Using highly sensitive detectors such as APDs or SPADs reduces the amount of laser pulse energy required for long-distance ranging to poorly reflective targets. The technological challenge of these photodetectors is that they must also be able to accommodate the incredibly large dynamic range of signal amplitudes.

As dictated by the properties of the optics, the focus of a laser return changes as a function of range; as a result, near objects are often out of focus. Furthermore, also as dictated by the properties of the optics, the location and size of the "blur"-i.e., the spatial extent of the optical signal-changes as a function of range, much like in a standard camera. These challenges are commonly addressed by using large detectors, segmented detectors, or multi-element detectors to capture all of the light or just a portion of the light over the full-distance range of objects. It is generally advisable to design the optics such that reflections from close objects are blurred, so that a portion of the optical energy does not reach the detector or is spread between multiple detectors. This design strategy reduces the dynamic range requirements of the detector and prevents the detector from damage.

Acquisition of the lidar imagery can include, for example, a 3D lidar system embedded in the front of car, where the 3D lidar system, includes a laser transmitter with any necessary optics, a single-element photoreceiver with any necessary dedicated or shared optics, and an optical scanner used to scan ("paint") the laser over the scene. Generating a full-frame 3D lidar range image-where the field of view is 20 degrees by 60 degrees and the angular resolution is 0.1 degrees (10 samples per degree)-can require emitting 120,000 pulses (20*10*60*10 = 120,000). When update rates of 30 frames per second are required, such as is commonly required for automotive lidar, roughly 3.6 million pulses per second must be generated and their returns captured.

There are many ways to combine and configure the elements of the lidar system-including considerations for the laser pulse energy, beam divergence, detector array size and array format (e.g., single element, linear (1D) array, or 2D array), and scanner to obtain a 3D image. If higher power lasers are deployed, pixelated detector arrays can be used, in which case the divergence of the laser would be mapped to a wider field of view relative to that of the detector array, and the laser pulse energy would need to be increased to match the proportionally larger field of view. For example-compared to the 3D lidar described previously-to obtain same-resolution 3D lidar images 30 times per second, a 120,000-element detector array (e.g., 200 x 600 elements) could be used with a laser that has pulse energy that is 120,000 times greater. An advantage of this "flash lidar" system is that it does not require an optical scanner; disadvantages are that the larger laser results in a larger, heavier system that consumes more power, and that it is possible that the required higher pulse energy of the laser will be capable of causing ocular damage. In general, the maximum average laser power and maximum pulse energy are limited by the requirement for the system to be eye-safe.

As noted above, while many lidar system operate by recording only the laser time of flight and using that data to obtain the distance to the first target return (closest) target, some lidar systems are capable of capturing both the range and intensity of one or multiple target returns created from each laser pulse. For example, for a lidar system that is capable of recording multiple laser pulse returns, the system can detect and record the range and intensity of multiple returns from a single transmitted pulse. In such a multi-pulse lidar system, the range and intensity of a return pulse from a from a closer-by object can be recorded, as well as the range and intensity of later reflection(s) of that pulse-one(s) that moved past the closer-by object and later reflected off of more-distant object(s). Similarly, if glint from the sun reflecting from dust in the air or another laser pulse is detected and mistakenly recorded, a multi-pulse lidar system allows for the return from the actual targets in the field of view to still be obtained.

The amplitude of the pulse return is primarily dependent on the specular and diffuse reflectivity of the target, the size of the target, and the orientation of the target. Laser returns from close, highly-reflective objects, are many orders of magnitude greater in intensity than the intensity of returns from distant targets. Many lidar systems require highly sensitive photodetectors, for example avalanche photodiodes (APDs), which along with their CMOS amplification circuits. So that distant, poorly-reflective targets may be detected, the photoreceiver components are optimized for high conversion gain. Largely because of their high sensitivity, these detectors may be damaged by very intense laser pulse returns.

For example, if an automotive equipped with a front-end lidar system were to pull up behind another car at a stoplight, the reflection off of the license plate may be significant-perhaps $10^{12}$ higher than the pulse returns from targets at the distance limits of the lidar system. When a bright laser pulse is incident on the photoreceiver, the large current flow through the photodetector can damage the detector, or the large currents from the photodetector can cause the voltage to exceed the rated limits of the electronic amplification circuits (which may be CMOS based), causing damage or saturation. Embodiments of the present disclosure can include optics and detectors (detector elements) configured such that the reflections (returns) from close objects are blurred, so that a portion of the optical energy is spread between multiple detectors. However, capturing the intensity of pulses over a larger dynamic range associated with laser ranging may be challenging because the signals can be too large to capture directly. The intensity can be inferred by using a recording of a bit-modulated output obtained using serial-bit encoding obtained from one or more voltage threshold levels. This technique is often referred to as time-over-threshold (TOT) recording or, when multiple-thresholds are used, multiple time-over-threshold (MTOT) recording.

As noted previously, lidar systems typically contend with optical signal levels that span a very wide dynamic range. In particular, signal returns from close objects are very intense. Close objects can include not only objects outside of the lidar system but also the lidar system's own transmit optics. Even when the best anti-reflection coatings are used, the return from the system's own transmit optics (the "t0" return, referring to the received signal at time = 0) is typically strong enough to saturate any photoreceiver that is sensitive enough to detect the weak signals returned by targets at long range. Signal returns from near targets may not be detected if they occur during the time it takes for a photoreceiver to settle (a.k.a., the recovery time) following saturation from the t0 return.

Aspects, examples, and embodiments of the present disclosure can exploit close-range blurring of laser spots to solve the t0 return saturation problem that can prevent detection of very close-range targets. For each laser spot imaged by a photoreceiver, two or more detector elements can be utilized. A primary detector element is sized and aligned to the system optics such that the laser spot will be contained within its active area for all targets beyond a close- range threshold distance, e.g., two (2) or five (5) meters, etc. At least one secondary detector element is sized and aligned to the system optics such that at least some portion of the laser spot will overlap it for all targets nearer than a close-range threshold distance, e.g., 2 or 5 meters, etc. The primary detector element and its supporting circuitry can be optimized to sense returns from far targets, and to settle (recover from saturation) following the t0 return before returns (from objects too distant to be detected by a secondary detector element) arrive. At least one secondary detector element and its supporting circuitry can be optimized to sense returns from very near targets, up to the point (distance) at which the primary detector element can settle from the t0 return and is capable of detecting targets. The union of outputs from the at least two detector elements and their supporting circuitry thereby provide target detection capability at all ranges from immediately after the t0 return to the longest operational range of the system.

Aspects, examples, and embodiments of the present disclosure can utilize range-dependent focus to transition from illuminating two detector elements with returns from very near targets to illuminating just one detector element for all other returns. In some examples, a split-detector can have or include a "bullseye" (concentric) detector configuration. Because two separate detector elements with separate amplifier chains are used, one channel can be optimized for the very strong t0 and near-target returns, while another channel can be optimized and used for all other returns. Whereas prior art systems would typically sacrifice some signal from far targets to accommodate near returns, embodiments according to the present disclosure utilize the blurred-focus effect to avoid such sacrifice (of signal from far returns), because the signal is shared between two channels only for the near-target case in which there is plenty of signal to spare. A circularly-symmetric "bullseye" detector configuration can be used for some examples, and can be largely insensitive to laser spot misalignment, shift due to scan angle or the range-parallax effect, and to laser spot image distortion.

Some embodiments of the present disclosure may include any one or more of the following: (1) Shaping of the primary and secondary detectors in a bullseye pattern to ensure near-target detection by the secondary detector regardless of the details of optical alignment, scanner angle, and laser spot image distortion; (2) efficient design of the circuitry supporting the secondary detector to limit power consumption and physical size of a related integrated circuit; and (3) efficient means of combining data from the at least two receiver channels per laser spot in order to limit the amount of data a user of the invention must process. Moreover, embodiments of the present disclosure can function in the complete absence of any range-parallax effect, and no particular geometric alignment between transmit and receive optical paths need be assumed.

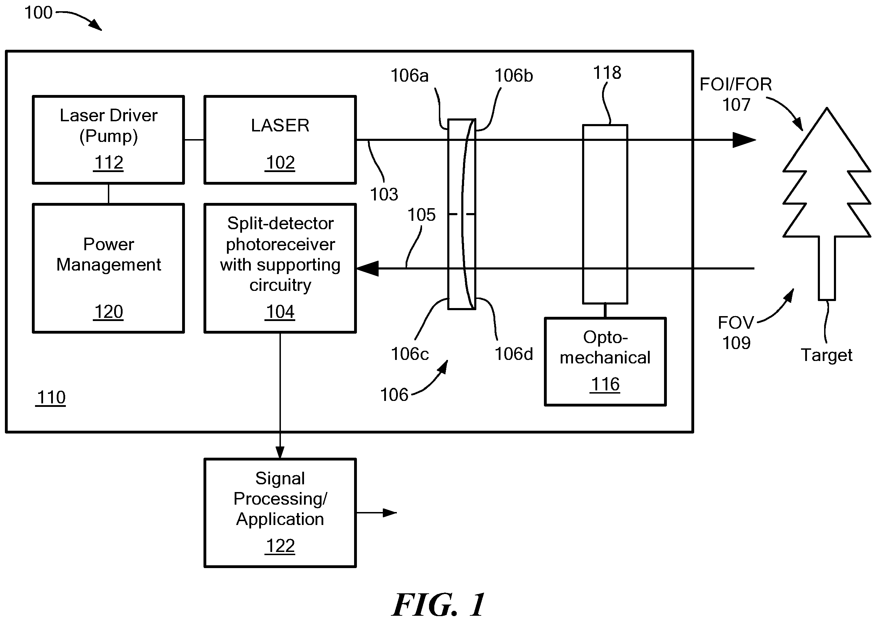

Fig. 1 is a block diagram showing major components of an example embodiment of a scanned lidar system 100 with a split-detector photoreceiver, in accordance with the present disclosure. System 100 includes an illumination source (laser) 102, e.g., a diode-pumped solid state laser (DPSSL), a split-detector photoreceiver 104 that includes supporting circuitry, and an optic or optics 106 (which can include multiple lens components, e.g., components 106a-d). The illumination source (laser) 102 produces an output 103, which may include one or more pulses in some embodiments. Optic 106 receives the output 103 from laser 102 and transmits an output (e.g., as a fan beam) directed away from the laser 102. In example embodiments, optic 106 can include, but is not limited to, a compound lens system or assembly (which can include one or more mirrors or reflective surfaces in addition to lenses or refractive optical elements), one or more diffractive optical elements (DOEs), and/or one or more gradient-index (GRIN) lenses, and/or the like.

The illumination source (laser) output 103 (a.k.a., transmit beam) can be projected through the optic(s) 106 to a field of interrogation ("FOI") 107, which can be scanned in some embodiments or stationary in other ("flash") embodiments. When scanned, the scanned FOI can be considered as a field of regard ("FOR"). Energy from output 103 is reflected from one or more targets (surfaces or objects) within the FOI/FOR 107. Reflected energy 105, e.g., in the form of one or more "returns," is detected by split-detector photoreceiver 104. Split-detector photoreceiver 104 includes primary and secondary detectors (detector elements) and supporting circuitry, e.g., an application-specific integrated circuit (ASIC) or readout integrated circuit (ROIC), that operates the detector elements. A field of view (FOV) 109 of the photoreceiver 104 is shown on the optical path between the laser (illumination source) 102 and the photoreceiver 104, which is directed to and "viewing" the FOV 109 through optic 106. Further details of photoreceiver 104 and similar split-detector photoreceivers are provided below.

In some embodiments, laser 102 and photoreceiver 104 can be co-located within a common housing 110, which may include a sensor window for the transmit beam 103 and receive beam 105. An optomechanical subsystem 116, which may include an actuator and a scanning element 118, e.g., a beam-steering mirror, can be included to scan the transmit beam 103 and receive beam 105 paths. An actuator driver can be included to control the movement of the actuator used for the beam-steering mirror. In some embodiments, optomechanical subsystem 116 and a scanning element 118 may be located within housing 110.

System 100 further includes a power management block 120, which provides and controls power to the system 100. Once returns 105 are received at the receiver 104, the incident photons are converted by the receiver (e.g., with detector elements such as photodiodes and current amplifiers such as transimpedance amplifiers) 104 to electrical signals, which can be directly processed by the ASIC/ROIC to discriminate and time pulse returns or digitized by supporting circuitry 114 for further signal processing 122 outside the supporting circuitry, e.g., ASIC/ROIC. As shown, system 100 can also include an optomechanical subsystem 116 including a steering/scanning system (actuator) for a scanning element 118 (e.g., beam steering mirror or rotatable prism) that is used to scan the transmit beam 103 and receive beam 105 paths over the FOR of the system.

In operation, photoreceiver 104 can be used to detect the returns 105 from the distant objects/surfaces and a timing system (not shown) can be used to calculate distances (ranges) accordingly, forming a 3D landscape corresponding to the objects and surfaces in the FOV and the related field-of-regard (FOR) (the volume subtended by the scanned FOV).

Any suitable laser may be used for illumination source 102. In some embodiments, the laser 102 can include an active medium including a crystal or glass matrix doped with rare earth ions. In some embodiments, laser 102 may include a diode-pumped solid-state laser having an active medium including erbium-doped glass. In some embodiments, the laser active medium can include erbium-doped yttrium aluminum borate (YAB). In some embodiments, laser 102 or associated pumping diodes may utilize or include indium-gallium-arsenide (InGaAs) or other suitable semiconductor alloy(s) as an active medium. In some embodiments, laser 102 produces an output in the near infrared (NIR) and/or short wavelength infrared (SWIR), e.g., any wavelength or range of wavelengths from about 730 nm to about 2100 nm and inclusive of any sub-range therein. In some embodiments, the laser 102 can be operative to produce a laser output having a wavelength of between about 800 nm and about 1800 nm, e.g., between about 1500 nm and about 1600 nm, between about 1515 nm and 1560 nm, or other sub-ranges, and/or wavelengths of (about) of 850 nm, 865 nm, 905 nm, 940 nm, 1350 nm, 1534 nm, or 1550 nm as non-limiting examples; active media producing other wavelengths may of course be utilized within the scope of the present disclosure. In some embodiments, laser 102 is a laser that is Class 1 eye-safe in accordance with industry-standard safety regulations, e.g., IEC 60825-1: 2014 and/or ANSI Z136.1-2014 (including as periodically updated).

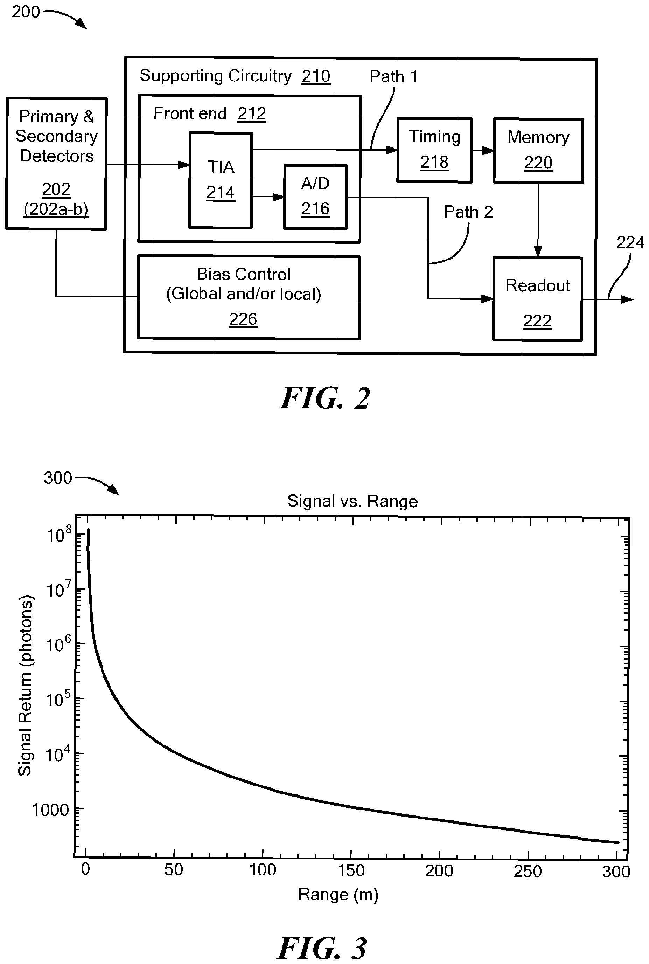

Fig. 2 is a block diagram of an example a split-detector lidar receiver 200 including supporting circuity 200, in accordance with an embodiment of the present disclosure. As shown, receiver 200 can include a split-detector photoreceiver 202 having primary and secondary photodetectors 202a-b e.g., photodiodes. Receiver 200 can include supporting circuitry 210 which can convert received optical signals to useful electrical waveforms, e.g., digital voltage signals. Supporting circuitry 210 can include a front end block 212 with a transimpedance amplifier block 212 (e.g., with a TIA for each of photodetectors 202a-b) and an analog-to-digital (A/D) block 216 (e.g., with an A/D for each of photodetectors 202a-b). Supporting circuitry 210 can also include timing block 218, memory block 220, and readout block 222, and can produce an output 224, e.g., for time-of-flight and distance calculation for a related lidar system (e.g., system 100 of Fig. 1). In some embodiments, supporting circuitry 200 can be included in or configured as an ASIC or ROIC.

Two different signal paths are illustrated in Fig. 2. One path ("Path 1") passes from TIA 212 to timing block 218 to memory block 220 to readout block 222. Path 1 can represent a synchronous embodiment, with framing and readout. Another path ("Path 2") passes from TIA 212 to A/D block 216 to readout block 222. Path 2 can represent an asynchronous embodiment that streams output in real time. While Path 2 does not show inclusion of a timing block or A/D conversion, in some embodiment, those functionalities can be provided by circuitry (e.g., one or more integrated circuits) used with supporting circuitry 200. For example, in some embodiments, A/D conversion can be performed in a chip separate from TIA 212 for Path 2.

Fig. 3 is a plot 300 showing signal v. range, in accordance with embodiments of the present disclosure. The signal level indicated, exemplary of most lidar systems, is shown varying by several orders of magnitude with approximately $1/range^2$ dependence. Signal level can be calculated according to the following equation (EQ. 1):

$$Signal = \frac{laser\ pulse\ energy}{photon\ energy} \; x \; \frac{reflectivity\ x\ optical\ eff.}{4} \; x \; \left(\frac{aperture}{range}\right)^2 x \; e^{(-2\ x\ atm.\ atten.\ x\ range)}$$

In the example shown in Fig. 3, the transmitted laser pulse is 0.5 μJ at 1550 nm, the target is a Lambertian reflector of 10% reflectivity, the optical efficiency of the lens system is 70%, the sensor aperture is 20 mm, the sensor is positioned directly in front of the target surface, and the atmospheric attenuation corresponds to light haze ($0.2\ km^{-1}$). As shown, signal return levels from targets close to the sensor are extremely strong, even when the targets are not very reflective.

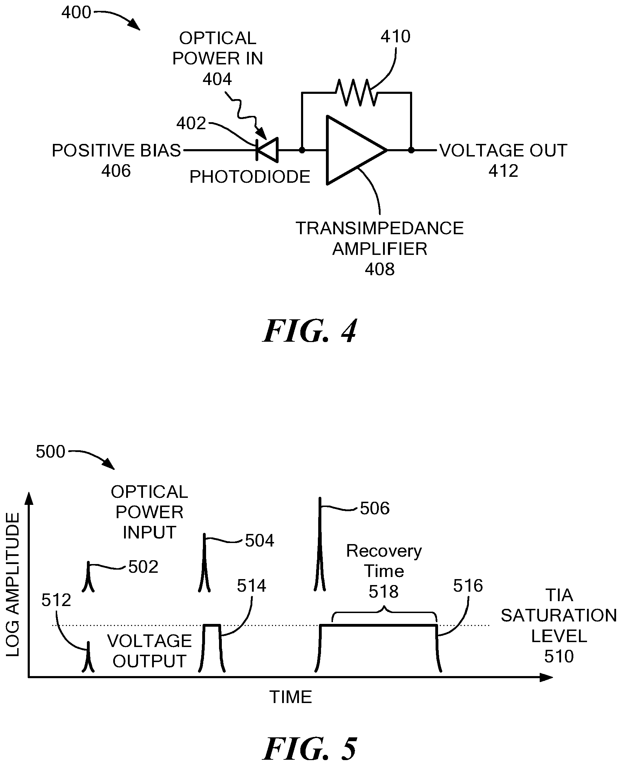

Fig. 4 is a diagram of an example photoreceiver 400, in accordance with the present disclosure. Photoreceiver 400 can include a photodetector 402, e.g., a photodiode. In some embodiments, photodetector 402 can include an avalanche photodiode (APD). Photoreceiver 400 can include transimpedance amplifier (TIA) 408 to generate voltage waveforms from the current emitted by photodetector (photodiode) 402. In operation, photodetector (photodiode) 402, under positive bias 406, would receive optical power in 404 (incident photons), and produce an output current, which would then be converted by TIA 408 (with feedback resistor 410) to an output voltage 412, shown as "Voltage Out." The output voltage 412 could be used, e.g., by one or more functional blocks of a related lidar system such as system 100 of Fig. 1.

Fig. 5 is a diagram 500 of signal power (log) v. time for lidar returns overlaid with corresponding TIA output voltages, in accordance with embodiments of the present disclosure. Three returns are shown (502, 504, 506) having different power levels (intensities). Corresponding TIA output voltage waveforms are shown (512, 514, 516).

As shown, for situations where a return has power that exceeds a threshold of a given TIA (the TIA saturation level 510), the TIA becomes saturated, producing an output that does not strictly correspond to the optical power of the return (e.g., is truncated) and that is extended in duration (time). Fig. 5 shows that TIAs have limited dynamic range, and when saturated by strong input signals, require time to settle, as indicated by recovery time 518, before they can respond to new signals.

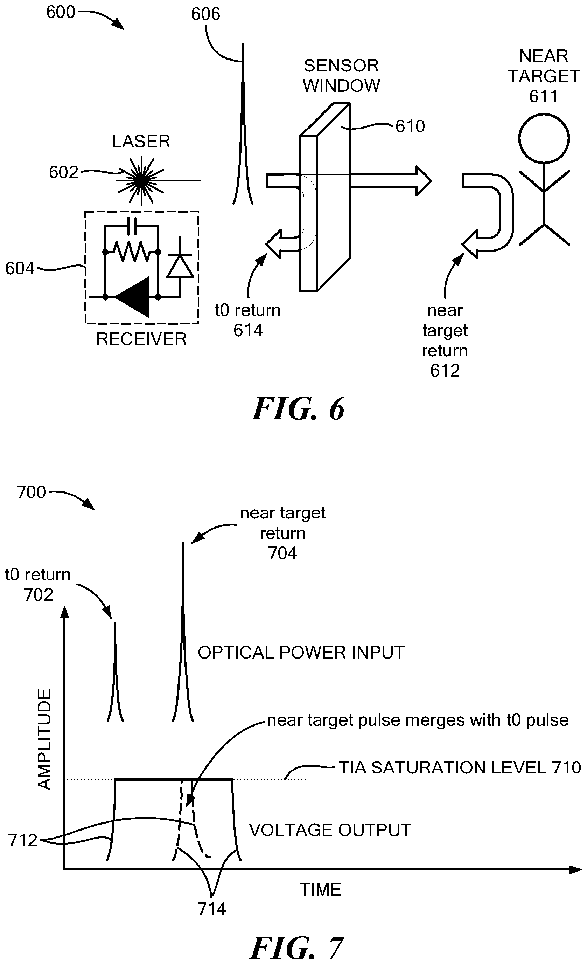

Fig. 6 is a diagram 600 showing the "time-zero" (a.k.a., "t0") problem for short-range detection, in accordance with embodiments of the present disclosure. In the scenario shown, laser 602 and receiver 604, with photodiode and supporting circuitry, are co-located with respect to a sensor window 610. Such a configuration could be realized for a scanning lidar with a monostatic laser-receiver configuration. Laser 602 produces output pulses, as shown by pulse 606, which are transmitted along an optical path through sensor window 610 to one or more targets, e.g., near target 611, producing one or more respective corresponding returns (indicated by near target return 612).

Partial reflection from sensor optics such as sensor window 610 at "time-zero" (t0), the time when the laser fires (produces a pulse), can produce optical signals (t0 pulse or return 614) strong enough to saturate a TIA in the receiver 604. If signal returns 612 from near targets (e.g., near target 611) arrive while the TIA is still in saturation, they will not produce a distinct voltage pulse at the TIA output. If the output voltage pulse from a near target return 612 merges with the t0 pulse 614, the near target 611 cannot be directly detected (see Fig. 7).

Fig. 7 is a diagram 700 of signal power v. time for t0 and near target returns overlaid with corresponding TIA output voltages, in accordance with embodiments of the present disclosure. Each of the t0 return 702 and the near target return 704 are of sufficient power to exceed the TIA saturation level 710. Consequently, TIA output pulse 712 corresponding to the t0 return 702 is truncated and stretched (in time) due to the saturation state of the TIA and corresponding recovery time. Likewise, TIA output pulse 714, corresponding to the near target return 704, is truncated and temporally stretched. As a result, the TIA output pulse corresponding to the t0 return, i.e., output pulse 712, becomes merged with the output pulse 714 corresponding to the near target return, as shown. Thus, the t0 return 702 can effectively temporarily blind the photoreceiver to the near target return 704, as indicated by the merged output pulse.

While is possible to engineer single-photodetector photoreceiver circuits to have different sensitivity, saturation, and recovery characteristics, there is a tradeoff between high sensitivity (which improves maximum effective range) and faster t0 recovery (which improves minimum effective range). In general, single photoreceivers optimized to sense weak signal returns from far targets are more prone to saturation. The problem of missing near targets due to saturation by the t0 return can also occur due to saturation produced by returns from other near targets, because of the $\sim 1/range^2$ dependence of lidar signal strength.

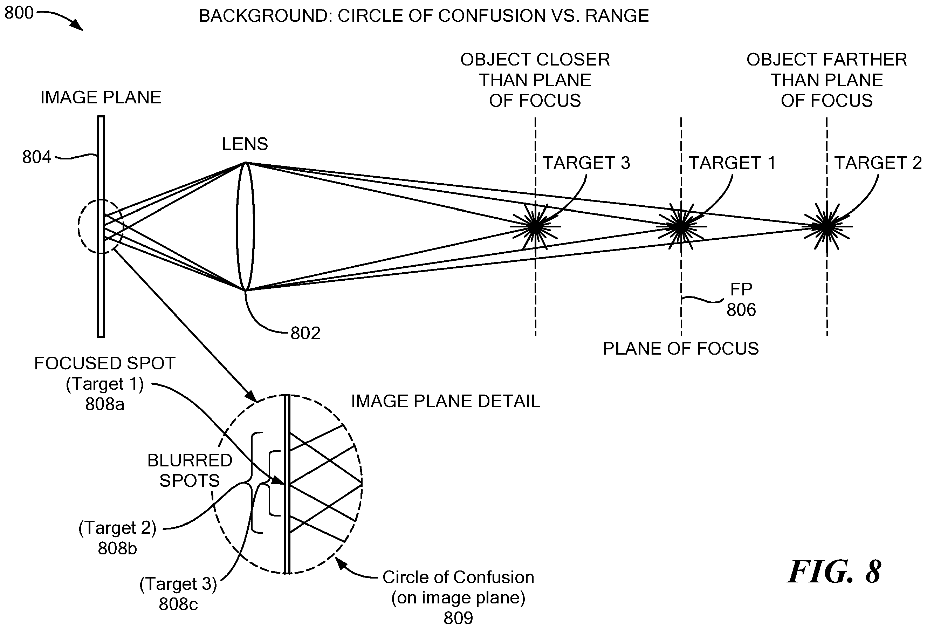

Fig. 8 is a diagram depicting an imaging system 800 and the circle of confusion ("CoC") for image spots of targets at various distances with respect to a lens and image plane, in accordance with an embodiment of the present disclosure. For system 800, lens 802 is configured to receive light from targets at different distances, respectively, from the lens 802 as shown by representative Targets 1, 2, and 3. Lens 802 is focused on plane of focus 806.

Because a lens can only focus on objects at a single distance, the image of an object is smallest if the object is at the lens's plane of focus. For system 800, assuming each of Targets 1-3 is the same size, Target 1 will produce focused spot (image) 808a having the smallest image size (spot size) at image plane 804 since Target 1 is located at the plane of focus 806. Spot 808b, for Target 2, is shown as overfocused while spot 808c, for Target 3, is shown as under-focused on image plane 804. Spots 808b-c are larger than spot 808a and represent the circle-of-confusion 809 for system 800.

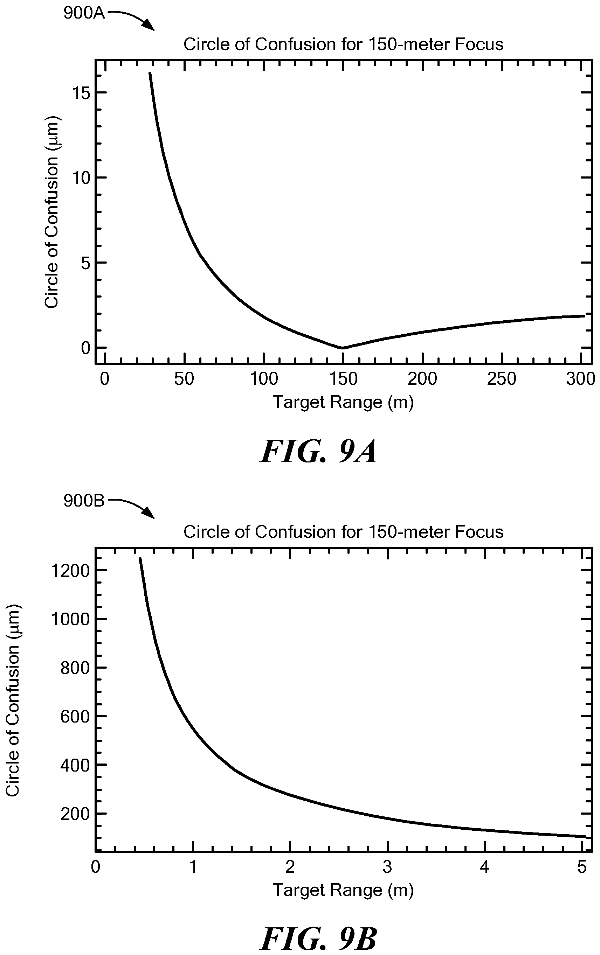

Figs. 9A-9B are graphs 900A-B of a circle-of-confusion v. range for different ranges, respectively, in accordance with a further embodiment of the present disclosure. Fig. 9A shows a circle-of-confusion v. range over a range of 0 to 300 meters while Fig. 9B shows the circle-of-confusion v. range over a range of 0 to 5 meters (i.e., a sub-range of the range shown in Fig. 9A). An idealized circle-of-confusion for a given optical system can be determined according to the following equation (EQ. 2):

$$CoC\ dia. = (ap.\ dia.)\ x\ \left(\frac{|range - foc.\ range|}{range}\right)\ x\ \left(\frac{focal\ length}{foc.\ range - focal\ length}\right) \qquad (EQ.\ 2)$$

For certain lens parameters exemplary of certain lidar systems, the circle-of-confusion is small over much of the system's operational range, but gets very large for very short ranges. For the example shown, the aperture diameter is 20 mm, the focused range is 150 meters, and the lens focal length is 28 mm.

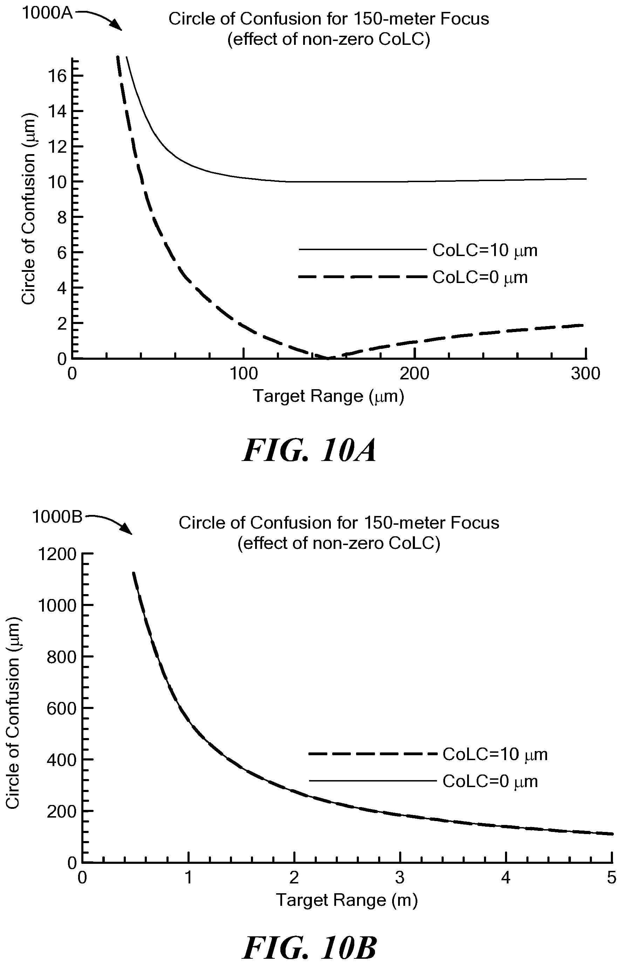

Figs. 10A-10B are graphs 1000A-B of a circle of least confusion (COLC) at different ranges, respectively, in accordance with a further embodiment of the present disclosure. As noted above, the circle-of-confusion (CoC) represents an idealized situation for a given optical system. Due to non-ideal optical factors, the minimum, real-world realization of the circle-of-confusion is known as the circle of least confusion (CoLC). The fundamental diffraction limit, lens imperfections and aberrations, and misalignments all limit the CoLC to a non-zero value. Graphs 1000A-B show CoC in case of a realistic optical system with CoLC=10 $\mu$m and an ideal system with CoLC=0 $\mu$m, i.e., equivalent to the idealized circle of confusion (CoC). As shown, the non-zero CoLC washes out the structure in the CoC near the focus distance but has little effect at small target ranges. In this example, the aperture diameter is 20 mm, the focused range is 150 meters, and the lens focal length is 28 mm, corresponding to an industrial grade molded aspherical lens producing a CoLC=10 $\mu$m.

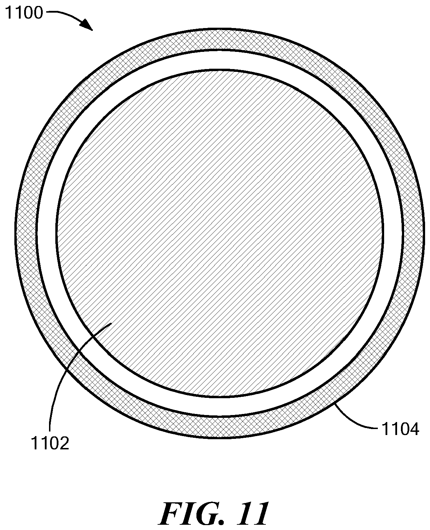

Fig. 11 is a diagram of an example split-detector photoreceiver 1100, in accordance with embodiments of the present disclosure. The split-detector photoreceiver 1100 is shown having a main (primary) detector (element) 1102 and a secondary detector (element) 1104. The main detector 1102 is configured such that the laser spot image (of a target imaged by associated lidar optics) is focused inside the optically sensitive region/area of this element for all target ranges except extremely close targets-those within a close-range threshold distance (e.g., less than 2 meters, 3 meters, 5 meters, etc.). The main detector element 1102 is connected to an amplifier, e.g., TIA (not shown), optimized for high sensitivity (for long ranges) and all except extremely close targets. The secondary, or near-target, detector element 1104 is configured such that the laser spot image overlaps at least a portion of this element 1104 for extremely close targets within the close-range threshold distance (e.g., less than 5 meters). Near-target detector element 1104 is connected to an amplifier, e.g., TIA (not shown) optimized for very strong signal returns typical of extremely close targets.

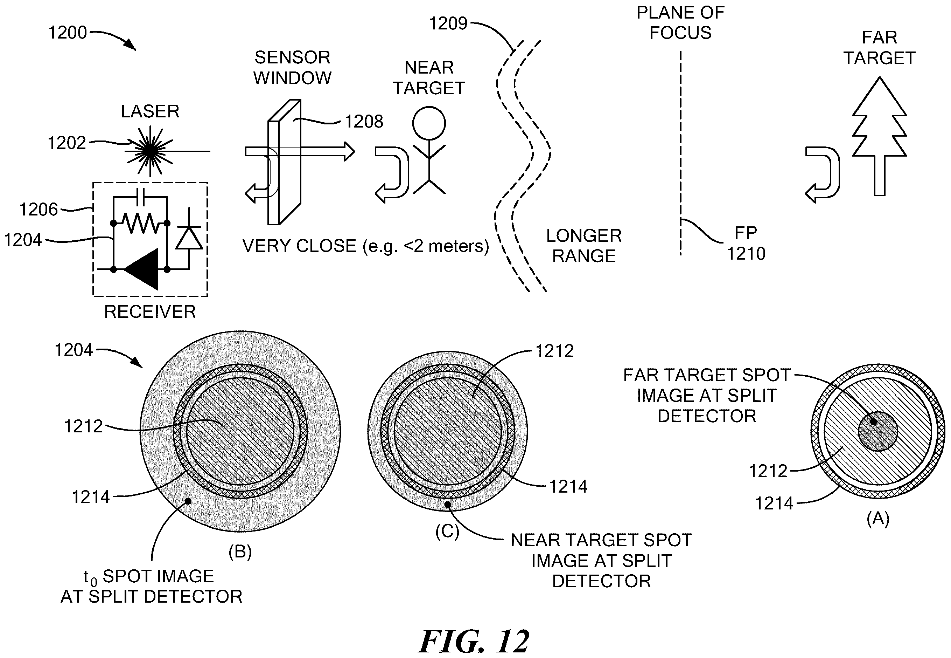

Fig. 12 is a diagram showing an example lidar system 1200 employing a split-detector photoreceiver, in accordance with an embodiment of the present disclosure. System 1200 is able to address and overcome the above-noted t0 problem. System 1200 includes a laser 1202 and split-detector photoreceiver 1204 with supporting circuitry, which may be co-located in a housing 1206 having a sensor window 1208. Close-range threshold distance 1209, described in further detail below, is also shown. Imaging optics (not shown) of system 1200 can be focused at plane of focus (FP) 1210. An optomechanical subsystem, which may include an actuator and beam-steering mirror, can be included to scan the transmit and receive beam paths.

As shown, split-detector photoreceiver 1204 includes a primary (or far-range) element 1212 and a secondary (or close-range) detector element 1214. The split-detector photoreceiver 1204 also includes supporting circuitry including an amplifier, e.g., a TIA, for each detector element. The system imaging optics (not shown) and split-detector photoreceiver 1204 are configured so that the laser spot image of a target imaged by the imaging optics is focused inside (within the optically sensitive area or region of) the primary detector element 1212 for all target ranges except extremely close targets, which are those within a close-range threshold distance 1209, e.g., less than 5 meters or so. Scenario A (at right) shows imaging of the laser spot image, from a return from a far target (tree) beyond the plane of focus, entirely within the optically sensitive area of the primary detector element 1212.

The system imaging optics (not shown) and split-detector photoreceiver 1204 are also configured such that the laser spot image overlaps at least a portion of the secondary detector element 1214 for extremely close targets - those within the close-range (near-range) threshold distance 1209 from the photoreceiver 1204, e.g., less than 5 meters. Scenario B shows the situation for a representative t0 spot image, with the spot image overlapping the primary 1212 and secondary 1214 detector elements. Scenario C shows the situation for a representative spot image from a near target return, e.g., a person located approximately 2 meters from the split-detector photoreceiver 1204. The spot image in scenario C overlaps the secondary receiver 1214 but the size of the spot image is somewhat reduced compared to the one in Scenario B.

In some embodiments, the recovery time of the secondary-detector supporting circuitry (second recovery time) is less than a lidar signal round-trip time of flight (TOF) between the photoreceiver 1204 and a target at the close-range threshold distance. In some embodiments, the primary-detector supporting circuitry can include a first transimpedance amplifier (TIA) having a first gain and the secondary-detector supporting circuitry can include a second transimpedance amplifier (TIA) having a second gain, with the first gain being greater than the second gain. In some embodiments, the first TIA has a first bandwidth, and the second TIA has a second bandwidth, with the first bandwidth being less than the second bandwidth.

It will be understood that the close-range threshold distance 1209, the range at which a laser spot begins to overlap a portion of the secondary detector element 1214, can be selected or designed for, e.g., based on one or more design parameters such as geometry of the imaging system, spacing between the primary detector element 1212 and secondary detector element 1214, geometry of the primary 1212 and/or secondary detector 1214 elements, and/or location of the secondary detector element 1214 relative to the primary detector element 1212, etc.

As shown, the primary detector 1212 can be enclosed by the secondary detector 1214 in some embodiments, e.g., in a "bullseye" configuration. In some embodiments, the primary detector 1212 can be partially enclosed by the secondary detector 1214. In some embodiments, the secondary detector 1214 can be adjacent to the primary detector 1212 and positioned to reduce reception of light originating outside the IFOV corresponding to the photoreceiver. In some embodiments, the primary detector 1212 has a circular shape and the secondary detector 1214 is configured as an annulus centered on the primary detector 1212. In some embodiments, the primary detector 1212 has a circular shape and the secondary detector 1214 is configured as an annulus sector centered on the primary detector 1212. In some embodiments, the primary detector 1212 includes an avalanche photodiode (APD). In some embodiments, the APD can include indium gallium arsenide (InGaAs). In some embodiments, a photoreceiver array can include a plurality of split-detector photoreceivers, configured to receive a plurality of lidar returns from a plurality of instantaneous fields-of-view (IFOV). For such a photoreceiver array, the primary detector of each photoreceiver can be enclosed by the secondary detector, in some embodiments. In some embodiments, for the photoreceiver array, the primary detector of each photoreceiver can be partially enclosed by the secondary detector. In some embodiments, for the photoreceiver array, the secondary detector of each photoreceiver can be adjacent to the primary detector and positioned to reduce reception of light originating outside that photoreceiver's corresponding IFOV. The photoreceiver array can be a one-dimensional (1D) array in some embodiment. The photoreceiver array can be a two-dimensional (2D) array in some embodiment. In some embodiments, for the photoreceiver array, the primary detector of one or more of the plurality of split-detector photoreceivers can include an avalanche photodiodes (APD). The APD can include an indium gallium arsenide (InGaAs) APD. In some embodiments, the primary-detector supporting circuitry and/or secondary-detector supporting circuitry can include a readout integrated circuit (ROIC). In some embodiments, the primary-detector supporting circuitry and/or secondary-detector supporting circuitry can include an application specific integrated circuit (ASIC).

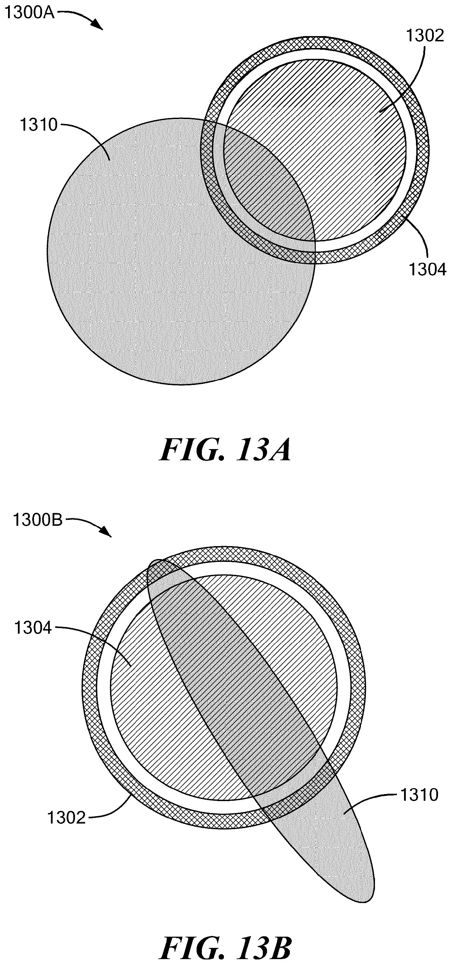

Figs. 13A-13B are diagrams showing split-detector photoreceiver configurations 1300A-B illustrating tolerance of split-detector photoreceivers to misalignment and distortion, respectively, in accordance with embodiments the present disclosure. For the embodiments shown, the primary (far target) detector element 1312 has a circular shape while the secondary (near target) detector element 1314 has an annular shape. The annular shape of the near target detector element 1314 can mitigate, or remove entirely, any negative impact of direction of misalignment or shape of a distorted laser spot 1310. As shown, high signal strength from near targets can afford a high degree of flexibility in configuring the detector element geometry to provide laser spot overlap with a near target detector element 1314. While the primary detector element 1312 is shown having a circular shape, the primary detector may have different shapes (e.g., square, rectangular, oval, etc.) in other embodiments. Similarly, while the secondary detector element 1314 is shown having an annulus shape, the secondary detector may have different shapes in other embodiments.

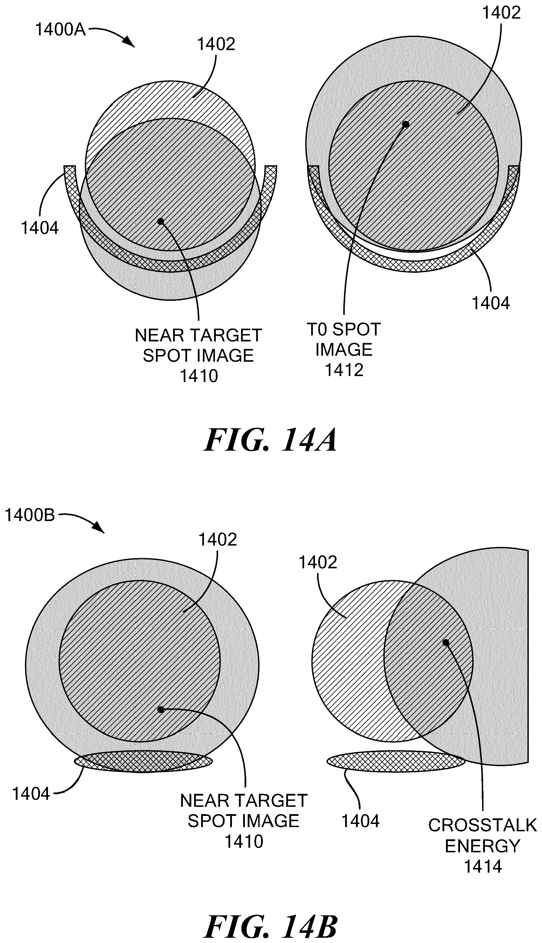

Figs. 14A-B are diagrams showing split-detector photoreceivers 1400A-B having non-annular secondary detector elements, in accordance with embodiments of the present disclosure. While primary detector element 1402 is circular, a non-annular detector element shape may be used for secondary detector element 1404 to further increase near target detection fidelity. Detector element shape for detector element 1404 may be chosen to reject unwanted light that is spatially separated from the near target spot image due to, e.g., (mis)alignment, parallax, scan angle, scatter, etc. Fig. 14A shows a T0 spot 1412 that is vertically shifted from near target returns and overlaps little with secondary (near target) detector element 1404. As shown in Fig. 14A, near target spot image 1410 does overlap significantly with secondary detector element 1404 while the T0 spot image 1412 does not.

Fig. 14B shows crosstalk or scattered light energy 1414 that is shifted horizontally relative to near target returns 1410 and does not overlap with the secondary (near target) detector element 1404, thus removing deleterious effects of the crosstalk or scattered light. As shown, the near target spot image 1410 does overlap with the secondary (near target) detector element 1404 while the cross talk energy 1414 does not.

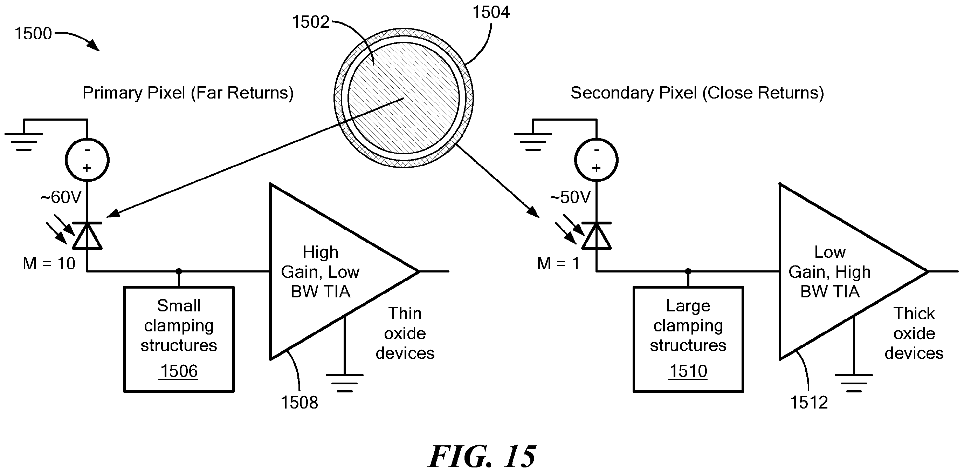

Fig. 15 is a diagram of an example split-detector lidar photoreceiver 1500 including supporting circuitry, in accordance with an embodiment of the present disclosure. Photoreceiver 1500 includes a primary (far range) detector element (a.k.a., primary pixel) 1502 and a secondary (near range) detector element (a.k.a., secondary pixel) 1504. In some embodiments, the primary and secondary detector elements 1502, 1504 can each include an avalanche photodiode (APD). The detector element (pixels) are connected to respective supporting circuitry 1503, 1505. Supporting circuitry 1503 for primary pixel 1502 is shown providing a representative value of -60 V bias for primary pixel 1502, a small clamping structure 1506, and a high gain (M = 50) low bandwidth TIA 1508. In some embodiments, TIA 1508 may be or include a thin oxide device. Supporting circuitry 1505 for secondary pixel 1504 is shown providing a representative value of -50 V bias for secondary pixel 1504, a large clamping structure 1510, and a low gain (M = 1) high bandwidth TIA 1512. In some embodiments, TIA 1512 may be or include a thick oxide device.

The individual pixels 1502, 1504 can be connected to APD biases and amplification circuits (in the respective supporting circuitry) that best match the noise and recovery time requirements of the receiver 1500. The two detector elements 1502 and 1504 with respective support circuitry 1503 and 1505 represent two separate channels. For each channel, the damage threshold can be designed to accommodate or be customized to the expected return signal range. For example, modifying APD gain affects the damage threshold of the photodetector and amplifier, while modifying the clamping structures and/or amplifier device type (e.g., thick vs thin oxide transistor devices) affects the damage threshold of the amplifier.

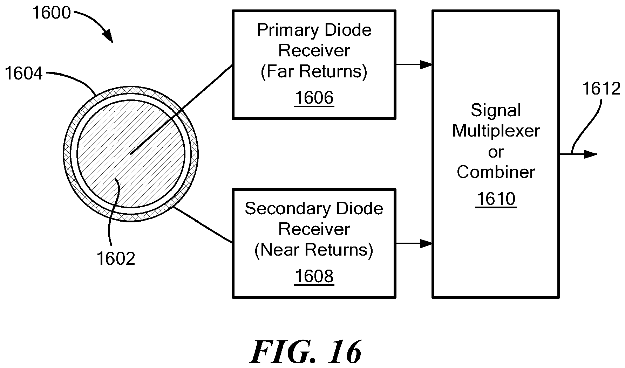

Fig. 16 is a diagram showing an example split-detector lidar photoreceiver 1600 with supporting circuitry and combined signal paths, in accordance with an embodiment of the present disclosure. Photoreceiver 1600 includes primary (far target) detector element 1602 and secondary (near target) detector element 1604. Primary detector element 1602 is coupled to supporting circuitry 1606, labeled as "primary diode receiver (far returns)." Secondary detector element 1604 is coupled to supporting circuitry 1608, labeled as "secondary diode receiver (near returns)." As shown, the multiple channels represented by the primary and secondary detector elements 1602, 1604, with their respective supporting circuitry, can be combined by signal multiplexer or combiner 1610.

For some embodiments, it may be advantageous to combine the multiple receiver paths within the receiver 1600, e.g., to limit external signal collection circuitry. While each channel could directly output data, this would effectively double signal collection circuitry utilized, e.g., ADC and/or thresholding circuits. In some embodiments, signal multiplexer/combiner 1610 can select a channel output based on whether the channel output corresponds to a return from a target beyond a near-target threshold distance (primary detector element 1602) or from a target within the near-target threshold distance (secondary detector element 1604).

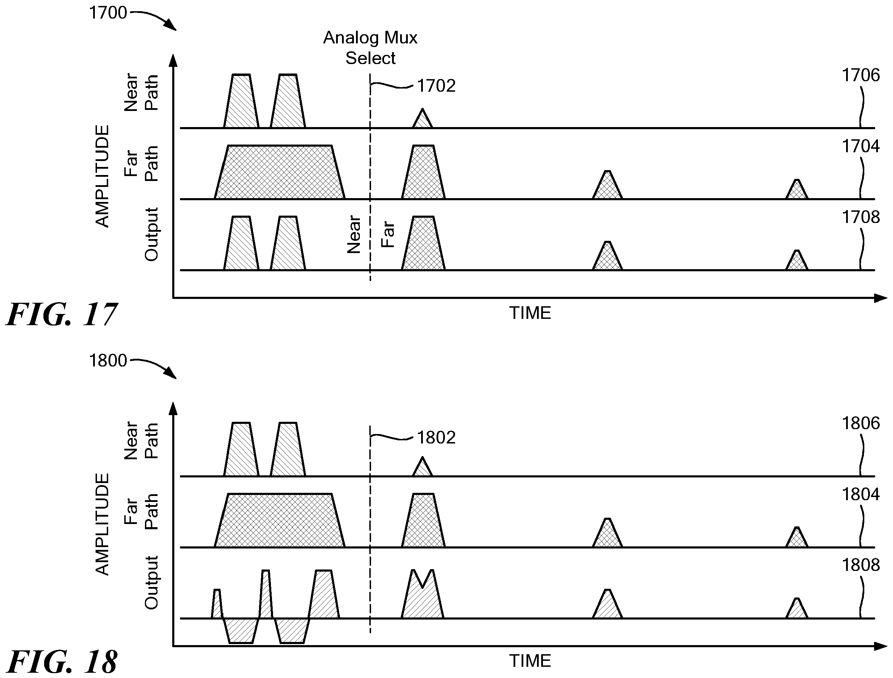

Fig. 17 is a diagram showing an example multiplexing scheme 1700 for combining near and far signal paths, in accordance with a further embodiment of the present disclosure. A close-range (near-range) threshold distance is shown as 1702, which may be selected/designed for. In some embodiments, the close-range threshold distance 1702 may be 5 meters or about (approximately) 5 meters. In other embodiments, any other suitable distance may be used as the close-range threshold distance. An output 1704 of a far path receiver channel is shown juxtaposed with an output 1706 of a near path receiver channel. A combined/multiplexed output 1708 is also shown.

As shown by 1706, the near path receiver channel has a shorter recovery time than that of the far path receiver channel (shown by 1704), which is shown in saturation at left (for the two returns from targets within the close-range threshold distance 1702. Outputs 1704 and 1706 also show that the far path receiver channel has a higher gain than the near path receiver channel.

As shown by 1708, an analog multiplexer can be used to switch from the output of the near return path to the output of the far return path at a time/distance at which the far return path will no longer experience saturation issues. Internally or externally generated MUX (multiplexing) select signal can be used to define if the near or far path is routed to the receiver output. Such an approach requires timing to outgoing laser pulse.

Fig. 18 is a diagram showing an example multiplexing scheme 1800 for combining near and far signal paths of a split-detector photoreceiver using encoding, in accordance with a further embodiment of the present disclosure. A close-range threshold distance is shown as 1802, which may be selected/designed for. In some embodiments, the close-range threshold distance 1802 may be five (5) meters or approximately (about) 5 meters. Other suitable values for the close-range threshold distance may be used in other embodiments. An output 1804 of a far path receiver channel is shown juxtaposed with an output 1806 of a near path receiver channel. Also shown is a combined/multiplexed output 1808, formed by combining the far path receiver channel output 1804 and near path receiver channel output 1806.

As shown by 1806, the near path receiver channel has a shorter recovery time than that of the far path receiver channel (shown by 1804), which is shown in saturation at left (for the two returns from targets within the close-range threshold distance 1802. Outputs 1804 and 1806 also show that the far path receiver channel has a higher gain than the near path receiver channel.

As shown, a weighted adding function can be used between the near and far paths to combine both paths into a single encoded output 1808. Such a weighted adding function can be highly dependent on path gains and bandwidths of the receiver channels. The following equation represents one possible example (EQ. 3):

$$OUTPUT = FAR\_PATH \; x \; NEAR\_PATH \; x \; 1.5 \qquad (EQ. 3)$$

Of course, it will be understood that other weighted adding (combination) functions may be used within the scope of the present disclosure.

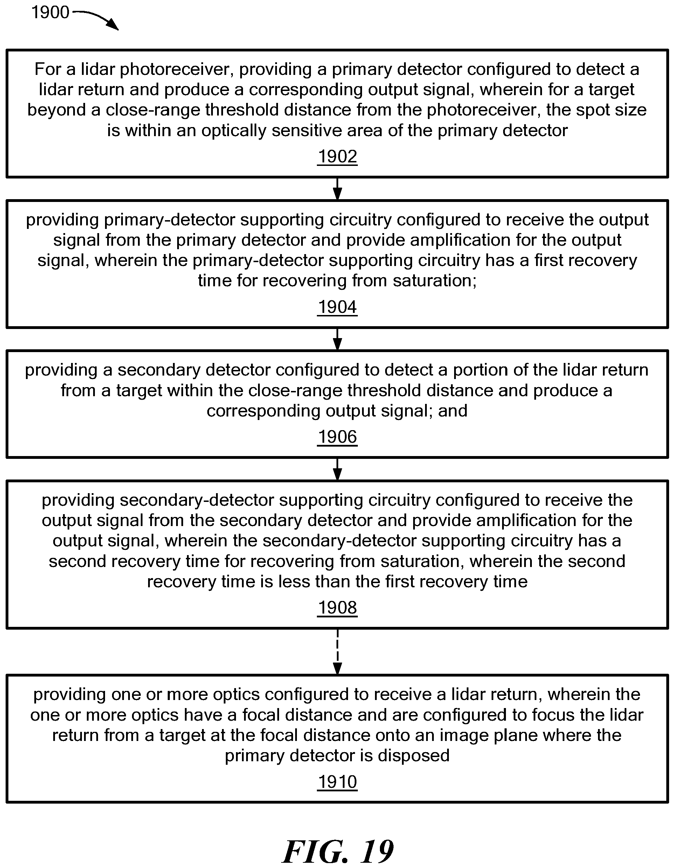

Fig. 19 is a block diagram depicting an example method 1900 of making a split-detector lidar photoreceiver, in accordance with embodiments of the present disclosure. The split-detector photoreceiver can be configured to receive a lidar return from a target within an instantaneous field-of-view (IFOV), with the lidar return having a spot image on the photoreceiver.

Method 1900 can include, for a lidar photoreceiver, providing a primary (far range) detector (detector element) configured to detect a lidar return and produce a corresponding output signal, wherein for a target beyond a close-range threshold distance from the photoreceiver, the spot size is within an optically sensitive area of the primary detector, as described at 1902. Example close-range threshold distances can include but are not limited to (exactly or approximately) 3m, 4m, 5m, ..., 10m, etc. In some embodiments, a primary detector can include a photodiode, e.g., an avalanche photodiode (APD). Primary-detector detector supporting circuitry can be provided that is configured to receive the output signal from the primary detector and provide amplification for the output signal, wherein the primary-detector supporting circuitry has a first recovery time for recovering from saturation, as described at 1904.

A secondary (near range) detector (detector element) can be provided that is configured to detect a portion of the lidar return from a target within the close-range threshold distance and produce a corresponding output signal, as described at 1906. In some embodiments, a secondary detector can include a photodiode, e.g., an avalanche photodiode (APD). Secondary-detector supporting circuitry can be provided that is configured to receive the output signal from the secondary detector and provide amplification for the output signal, wherein the secondary-detector supporting circuitry has a second recovery time for recovering from saturation, wherein the second recovery time is less than the first recovery time of the primary detector, as described at 1908. In some embodiments, the primary-detector supporting circuitry and/or secondary-detector supporting circuitry can include an application-specific integrated circuit (ASIC).

One or more optics can be provided that is/are configured to receive a lidar return, wherein the one or more optics have a focal distance (are focused on a plane of focus) and are configured to focus the lidar return from a target at the focal distance onto an image plane where the primary detector is disposed, as described at 1910.

In some embodiments, method 1900 can further include forming an array of split-detector photoreceivers by repeating steps noted above (for the primary and secondary detectors and respective supporting circuitry) one or more times, wherein each repeated set of steps produces an additional split-detector photoreceiver having a respective IFOV, wherein the array of split-detector photoreceivers is configured to receive a plurality of lidar returns from a plurality of respective instantaneous fields-of-view (IFOV).

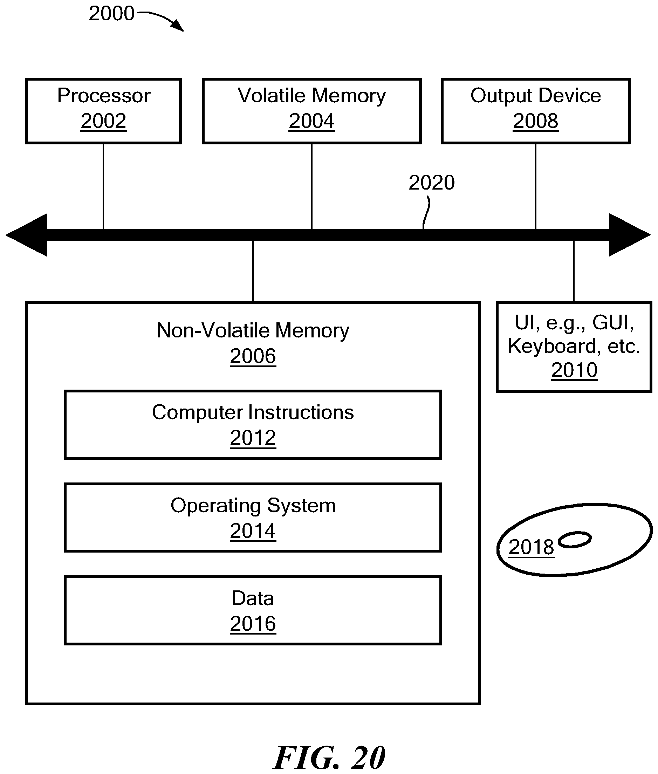

Fig. 20 is a schematic diagram of an example computer system 2000 that can perform all or at least a portion of the processing, e.g., steps in the algorithms and methods, including ranging determination and point cloud generation, as described herein. The computer system 2000 includes a processor 2002, a volatile memory 2004, a non-volatile memory 2006 (e.g., hard disk), an output device 2008 and a user input or interface (UI) 2010, e.g., graphical user interface (GUI), a mouse, a keyboard, a display, and/or any common user interface, etc. The non-volatile memory (non-transitory storage medium) 2006 stores computer instructions 2012 (a.k.a., machine-readable instructions or computer-readable instructions) such as software (computer program product), an operating system 2014 and data 2016. In one example, the computer instructions 2012 are executed by the processor 2002 out of (from) volatile memory 2004. In one embodiment, an article 2018 (e.g., a storage device or medium such as a hard disk, an optical disc, magnetic storage tape, optical storage tape, flash drive, etc.) includes or stores the non-transitory computer-readable instructions.

Processing may be implemented in hardware, software, or a combination of the two. Processing may be implemented in computer programs executed on programmable computers/machines that each includes a processor, a storage medium or other article of manufacture that is readable by the processor (including volatile and non-volatile memory and/or storage elements), and optionally at least one input device, and one or more output devices. Program code may be applied to data entered using an input device or input connection (e.g., port or bus) to perform processing and to generate output information.

The system 2000 can perform processing, at least in part, via a computer program product, (e.g., in a machine-readable storage device), for execution by, or to control the operation of, data processing apparatus (e.g., a programmable processor, a computer, or multiple computers). Each such program may be implemented in a high-level procedural or object-oriented programming language to communicate with a computer system. However, the programs may be implemented in assembly or machine language. The language may be a compiled or an interpreted language and it may be deployed in any form, including as a stand-alone program or as a module, component, subroutine, or other unit suitable for use in a computing environment. A computer program may be deployed to be executed on one computer or on multiple computers at one site or distributed across multiple sites and interconnected by a communication network. A computer program may be stored on a storage medium or device (e.g., CD-ROM, hard disk, or magnetic diskette) that is readable by a general or special purpose programmable computer for configuring and operating the computer when the storage medium or device is read by the computer. Processing may also be implemented as a machine-readable storage medium, configured with a computer program, where upon execution, instructions in the computer program cause the computer to operate.

Processing may be performed by one or more programmable processors executing one or more computer programs to perform the functions of the system. All or part of the system may be implemented as special purpose logic circuitry, e.g., an FPGA (field programmable gate array) and/or an ASIC (application-specific integrated circuit).

Accordingly, embodiments of the inventive subject matter can afford various and numerous benefits relative to prior art techniques. For example, embodiments of the present disclosure can enable or provide use of split-detector lidar e that can accommodate large ranges of return signal strength while rejecting or accommodating t0 or near target returns that otherwise would cause the lidar receiver to become saturated. Aspects, examples, and embodiments of the present disclosure can function in the complete absence of any range-parallax effect. Moreover, no particular geometric alignment between transmit and receive optical paths must be assumed.

Various embodiments of the concepts, systems, devices, structures, and techniques sought to be protected are described above with reference to the related drawings. Alternative embodiments can be devised without departing from the scope of the concepts, systems, devices, structures, and techniques described. For example, while refence is made above to pulsed lasers, continuous wave (CW) lasers may be used within the scope of the present disclosure. Moreover, while embodiments are described as used with scanning lidar systems, illumination or transmit optics and techniques as described herein may be used with/for flash lidar systems within the scope of the present disclosure.

It is noted that various connections and positional relationships (e.g., over, below, adjacent, etc.) may be used to describe elements in the description and drawing. These connections and/or positional relationships, unless specified otherwise, can be direct or indirect, and the described concepts, systems, devices, structures, and techniques are not intended to be limiting in this respect. Accordingly, a coupling of entities can refer to either a direct or an indirect coupling, and a positional relationship between entities can be a direct or indirect positional relationship.

As an example of an indirect positional relationship, positioning element "A" over element "B" can include situations in which one or more intermediate elements (e.g., element "C") is between elements "A" and elements "B" as long as the relevant characteristics and functionalities of elements "A" and "B" are not substantially changed by the intermediate element(s).

Also, the following definitions and abbreviations are to be used for the interpretation of the claims and the specification. The terms "comprise," "comprises," "comprising," "include," "includes," "including," "has," "having," "contains" or "containing," or any other variation are intended to cover a non-exclusive inclusion. For example, an apparatus, a method, a composition, a mixture, or an article that comprises a list of elements is not necessarily limited to only those elements but can include other elements not expressly listed or inherent to such apparatus, method, composition, mixture, or article.

Additionally, the term "exemplary" means "serving as an example, instance, or illustration." Any embodiment or design described as "exemplary" is not necessarily to be construed as preferred or advantageous over other embodiments or designs. The terms "one or more" and "at least one" indicate any integer number greater than or equal to one, i.e., one, two, three, four, etc.; though, where context admits such terms may include fractional values greater than one. The term "plurality" indicates any integer number greater than one. The term "connection" can include an indirect "connection" and a direct "connection."

References in the specification to "embodiments," "one embodiment," "an embodiment," "an example embodiment," "an example," "an instance," "an aspect," etc., indicate that the embodiment described can include a particular feature, structure, or characteristic, but every embodiment may or may not include the particular feature, structure, or characteristic. Moreover, such phrases do not necessarily refer to the same embodiment. Further, when a particular feature, structure, or characteristic is described in connection with an embodiment, it may affect such feature, structure, or characteristic in other embodiments whether explicitly described or not.

Relative or positional terms including, but not limited to, the terms "upper," "lower," "right," "left," "vertical," "horizontal," "top," "bottom," and derivatives of those terms relate to the described structures and methods as oriented in the drawing figures. The terms "overlying," "atop," "on top," "positioned on" or "positioned atop" mean that a first element, such as a first structure, is present on a second element, such as a second structure, where intervening elements such as an interface structure can be present between the first element and the second element. The term "direct contact" means that a first element, such as a first structure, and a second element, such as a second structure, are connected without any intermediary elements.

Use of ordinal terms such as "first," "second," "third," etc., in the claims to modify a claim element does not by itself connote any priority, precedence, or order of one claim element over another, or a temporal order in which acts of a method are performed, but are used merely as labels to distinguish one claim element having a certain name from another element having a same name (but for use of the ordinal term) to distinguish the claim elements.

The terms "approximately" and "about" may be used to mean within $\pm 20\%$ of a target value in some embodiments, within plus or minus ($\pm$) 10% of a target value in some embodiments, within $\pm 5\%$ of a target value in some embodiments, and yet within $\pm 2\%$ of a target value in some embodiments. The terms "approximately" and "about" may include the target value. The term "substantially equal" may be used to refer to values that are within $\pm 20\%$ of one another in some embodiments, within $\pm 10\%$ of one another in some embodiments, within $\pm 5\%$ of one another in some embodiments, and yet within $\pm 2\%$ of one another in some embodiments.

The term "substantially" may be used to refer to values that are within $\pm 20\%$ of a comparative measure in some embodiments, within $\pm 10\%$ in some embodiments, within $\pm 5\%$ in some embodiments, and yet within $\pm 2\%$ in some embodiments. For example, a first direction that is "substantially" perpendicular to a second direction may refer to a first direction that is within $\pm 20\%$ of making a 90° angle with the second direction in some embodiments, within $\pm 10\%$ of making a 90° angle with the second direction in some embodiments, within $\pm 5\%$ of making a 90° angle with the second direction in some embodiments, and yet within $\pm 2\%$ of making a 90° angle with the second direction in some embodiments.

The disclosed subject matter is not limited in its application to the details of construction and to the arrangements of the components set forth in the following description or illustrated in the drawings. The disclosed subject matter is capable of other embodiments and of being practiced and carried out in various ways.

Also, the phraseology and terminology used in this patent are for the purpose of description and should not be regarded as limiting. As such, the conception upon which this disclosure is based may readily be utilized as a basis for the designing of other structures, methods, and systems for carrying out the several purposes of the disclosed subject matter. Therefore, the claims should be regarded as including such equivalent constructions as far as they do not depart from the spirit and scope of the disclosed subject matter.

Although the disclosed subject matter has been described and illustrated in the foregoing embodiments, the present disclosure has been made only by way of example. Thus, numerous changes in the details of implementation of the disclosed subject matter may be made without departing from the spirit and scope of the disclosed subject matter.

Accordingly, the scope of this patent should not be limited to the described implementations but rather should be limited only by the spirit and scope of the following claims.

All publications and references cited in this patent are expressly incorporated by reference in their entirety.

## Claims

1. A split-detector photoreceiver configured to receive a lidar return from a target within an instantaneous field-of-view (IFOV), the lidar return having a spot image on the photoreceiver, the photoreceiver comprising:

    a primary detector configured to detect the lidar return and produce a corresponding output signal, wherein for a target beyond a close-range threshold distance from the photoreceiver, the spot image is within an optically-

sensitive area of the primary detector;

primary-detector supporting circuitry configured to receive the output signal from the primary detector and provide amplification for the output signal, wherein the primary-detector supporting circuitry has a first recovery time for recovering from saturation;

a secondary detector configured to detect a portion of the lidar return from a target within the close-range threshold distance and produce a corresponding output signal; and

secondary-detector supporting circuitry configured to receive the output signal from the secondary detector and provide amplification for the output signal, wherein the secondary-detector supporting circuitry has a second recovery time for recovering from saturation, wherein the second recovery time is less than the first recovery time.

2. The photoreceiver of claim 1, wherein the second recovery time of the secondary-detector supporting circuitry is less than a lidar signal round-trip time of flight (TOF) between the photoreceiver and a target at the close-range threshold distance.

3. The photoreceiver of claim 1, wherein the primary-detector supporting circuitry comprises a first transimpedance amplifier (TIA) having a first gain; wherein the secondary-detector supporting circuitry comprises a second transimpedance amplifier (TIA) having a second gain; and wherein the first gain is greater than the second gain.

4. The photoreceiver of claim 3, wherein the first TIA has a first bandwidth; wherein the second TIA has a second bandwidth; and wherein the first bandwidth is less than the second bandwidth.

5. The photoreceiver of claim 1, wherein the primary-detector supporting circuitry comprises a first clamping structure; wherein the secondary-detector supporting circuitry comprises a second clamping structure; and wherein the first clamping structure is smaller than the second clamping structure.

6. The photoreceiver of claim 1, wherein the primary detector is enclosed by the secondary detector.

7. The photoreceiver of claim 1, wherein the primary detector is partially enclosed by the secondary detector.

8. The photoreceiver of claim 1, wherein the secondary detector is adjacent to the primary detector and positioned to reduce reception of light originating outside the IFOV corresponding to the photoreceiver.

9. The photoreceiver of claim 1, wherein the primary detector comprises a circular shape.

10. The photoreceiver of claim 1, wherein the primary detector comprises a circular shape and the secondary detector comprises an annulus centered on the primary detector.

11. The photoreceiver of claim 1, wherein the primary detector comprises a circular shape and the secondary detector comprises an annulus sector centered on the primary detector.

12. The photoreceiver of claim 1, wherein the close-range threshold distance is about 5 meters.

13. The photoreceiver of claim 1, wherein the primary-detector supporting circuitry and/or secondary-detector supporting circuitry comprises a readout integrated circuit (ROIC).

14. The photoreceiver of claim 1, further comprising a multiplexer configured to combine a first output from the primary-detector supporting circuitry with a second output of the secondary-detector supporting circuitry.

15. The photoreceiver of claim 1, wherein the primary detector comprises a photodiode.

16. A photoreceiver array comprising a plurality of split-detector photoreceivers of any of claims 1 to 15, configured to receive a plurality of lidar returns from a plurality of instantaneous fields-of-view (IFOV).

17. The photoreceiver array of claim 16, wherein the photoreceiver array comprises a one-dimensional (1D) array.

18. The photoreceiver array of claim 16, wherein the photoreceiver array comprises a two-dimensional (2D) array.

19. The photoreceiver array of claim 16, wherein the primary detector of one or more of the plurality of split-detector photoreceivers comprises an avalanche photodiode (APD).

20. A system comprising:

one or more optics configured to receive a lidar return, wherein the one or more optics have a focal distance and are configured to focus the lidar return from a target, within an instantaneous field of view (IFOV) and at the focal distance, as a lidar return image onto an image plane; and
a split-detector photoreceiver according to any of claims 1 to 15, the photoreceiver disposed at the image plane to receive the lidar return.

21. The system of claim 20, wherein the one or more optics comprise one or more transmit optics configured to transmit a lidar signal corresponding to the lidar return, and wherein the second recovery time of the secondary-detector supporting circuitry following reception of a partial reflection of the lidar signal from the one or more transmit optics is less than a time of flight (TOF) between the photoreceiver and a target at a minimum desired effective range of the split-detector photoreceiver.

22. The system of claim 20, further comprising one or more additional split-detector photoreceivers and forming an array according to any of claims 16 to 19.

23. The system of claim 20, wherein an optical path of the one or more optics comprises a monostatic configuration with a transmit optical path of an outgoing lidar signal in common with a receive optical path of an incoming lidar return.

24. The system of claim 20, wherein an optical path of the one or more optics comprises a bistatic configuration with a transmit optical path of an outgoing lidar signal that is separate from a receive optical path of an incoming lidar return.

25. The system of claim 20, wherein the primary detector and secondary detector are configured to detect lidar returns from one or more targets over a range from a minimum desired effective range that is close to the one or more optics, to a maximum desired effective range at or greater than the focal distance of the one or more optics.

26. A method of making a split-detector photoreceiver configured to receive a lidar return from a target within an instantaneous field-of-view (IFOV), the lidar return having a spot image on the photoreceiver, the method comprising:

(A) providing a primary detector configured to detect the lidar return and produce a corresponding output signal, wherein for a target beyond a close-range threshold distance from the photoreceiver the spot image is within an optically-sensitive area of the primary detector;
(B) providing primary-detector supporting circuitry configured to receive the output signal from the primary detector and provide amplification for the output signal, wherein the primary-detector supporting circuitry has a first recovery time for recovering from saturation;
(C) providing a secondary detector configured to detect a portion of the lidar return from a target within the close-range threshold distance and produce a corresponding output signal; and
(D) providing secondary-detector supporting circuitry configured to receive the output signal from the secondary detector and provide amplification for the output signal, wherein the secondary-detector supporting circuitry has a second recovery time for recovering from saturation, wherein the second recovery time is less than the first recovery time.

27. The method of claim 26, further comprising providing one or more optics configured to receive a lidar return, wherein the one or more optics have a focal distance and are configured to focus the lidar return from a target at the focal distance onto an image plane, wherein the primary detector is disposed at the image plane.

28. The method of claim 26, wherein the primary detector comprises an avalanche photodiode (APD).

29. The photoreceiver of claim 1, or the photoreceiver array of claim 0, or the method of claim 28, wherein the APD comprises an indium gallium arsenide (InGaAs) APD.

30. The method of claim 26, further comprising forming an array of split-detector photoreceivers by repeating steps (A)-(D) one or more times, wherein each repeated set of steps (A)-(D) produces an additional split-detector photoreceiver having a respective IFOV, wherein the array of split-detector photoreceivers is configured to receive a plurality of lidar returns from a plurality of respective instantaneous fields-of-view (IFOV).

**31.** The method of claim 26, wherein the primary-detector supporting circuitry and/or secondary-detector supporting circuitry comprises an application-specific integrated circuit (ASIC).

**FIG. 1**

EP 4 502 651 A1

200 ⟍

**Supporting Circuitry 210**

Path 1

**Primary & Secondary Detectors 202 (202a-b)**

**Front end 212**

**TIA 214**

**A/D 216**

**Timing 218**

**Memory 220**

Path 2

**Bias Control (Global and/or local) 226**

**Readout 222**

224

## FIG. 2

300 ⟍

### Signal vs. Range

## FIG. 3

**FIG. 4**

**FIG. 5**

600

606

SENSOR
WINDOW

NEAR
TARGET
611

LASER

602

610

604

RECEIVER

t0 return
614

near
target
return
612

*FIG. 6*

700

near target
return
704

t0 return
702

OPTICAL POWER INPUT

near target pulse merges with t0 pulse

TIA SATURATION LEVEL 710

AMPLITUDE

VOLTAGE OUTPUT

712

TIME

714

*FIG. 7*

BACKGROUND: CIRCLE OF CONFUSION VS. RANGE

FIG. 8

900A

Circle of Confusion for 150-meter Focus

**FIG. 9A**

900B

Circle of Confusion for 150-meter Focus

**FIG. 9B**

Circle of Confusion for 150-meter Focus
(effect of non-zero CoLC)

1000A

CoLC=10 μm
CoLC=0 μm

Circle of Confusion (μm)

Target Range (μm)

**FIG. 10A**

Circle of Confusion for 150-meter Focus
(effect of non-zero CoLC)

1000B

CoLC=10 μm
CoLC=0 μm

Circle of Confusion (μm)

Target Range (m)

**FIG. 10B**

1100

1102

1104

**FIG. 11**

FIG. 12

FAR TARGET

PLANE OF FOCUS

FP 1210

LONGER RANGE

1209

NEAR TARGET

SENSOR WINDOW

1208

VERY CLOSE (e.g. <2 meters)

LASER

1202

1206

1204

RECEIVER

1200

FAR TARGET SPOT IMAGE AT SPLIT DETECTOR

1212

1214

(A)

NEAR TARGET SPOT IMAGE AT SPLIT DETECTOR

1212

1214

(C)

1204

1212

1214

(B)

$t_0$ SPOT IMAGE AT SPLIT DETECTOR

1300A

1302

1310

1304

**FIG. 13A**

1300B

1304

1302

1310

**FIG. 13B**

1400A

1402

1404

NEAR TARGET
SPOT IMAGE
1410

1402

1404

T0 SPOT
IMAGE
1412

## FIG. 14A

1400B

1402

1404

NEAR TARGET
SPOT IMAGE
1410

1402

1404

CROSSTALK
ENERGY
1414

## FIG. 14B

1500

Primary Pixel (Far Returns)

Secondary Pixel (Close Returns)

1504

1502

~60V

M = 10

Small clamping structures 1506

High Gain, Low BW TIA

Thin oxide devices

1508

~50V

M = 1

Large clamping structures 1510

Low Gain, High BW TIA

Thick oxide devices

1512

*FIG. 15*

1600

1604

1602

Primary Diode
Receiver
(Far Returns)
1606

Secondary Diode
Receiver
(Near Returns)
1608

Signal
Multiplexer
or
Combiner
1610

1612

*FIG. 16*

*FIG. 17*

*FIG. 18*

1900 ⟍

For a lidar photoreceiver, providing a primary detector configured to detect a lidar return and produce a corresponding output signal, wherein for a target beyond a close-range threshold distance from the photoreceiver, the spot size is within an optically sensitive area of the primary detector
1902

providing primary-detector supporting circuitry configured to receive the output signal from the primary detector and provide amplification for the output signal, wherein the primary-detector supporting circuitry has a first recovery time for recovering from saturation;
1904

providing a secondary detector configured to detect a portion of the lidar return from a target within the close-range threshold distance and produce a corresponding output signal; and
1906

providing secondary-detector supporting circuitry configured to receive the output signal from the secondary detector and provide amplification for the output signal, wherein the secondary-detector supporting circuitry has a second recovery time for recovering from saturation, wherein the second recovery time is less than the first recovery time
1908

providing one or more optics configured to receive a lidar return, wherein the one or more optics have a focal distance and are configured to focus the lidar return from a target at the focal distance onto an image plane where the primary detector is disposed
1910

*FIG. 19*

2000

| Processor 2002 | Volatile Memory 2004 | Output Device 2008 |

2020

Non-Volatile Memory 2006

Computer Instructions 2012

Operating System 2014

Data 2016

UI, e.g., GUI, Keyboard, etc. 2010

2018

*FIG. 20*

Europäisches
Patentamt

European
Patent Office

Office européen
des brevets

# EUROPEAN SEARCH REPORT

**Application Number**

EP 24 18 4090

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | EP 2 998 700 A1 (HEXAGON TECHNOLOGY CT GMBH [CH]) 23 March 2016 (2016-03-23) * paragraphs [0001], [0002], [0017] * * paragraphs [0022] - [0049] * * paragraphs [0070] - [0135] * | 1-31 | INV. G01S7/481 G01S7/4861 G01S7/4863 G01S7/4865 G01S17/00 |
| A | FABIO ACERBI ET AL: "Silicon Photomultipliers: Technology Optimizations for Ultraviolet, Visible and Near-Infrared Range", INSTRUMENTS, vol. 3, no. 1, 12 February 2019 (2019-02-12), page 15, XP055763595, DOI: 10.3390/instruments3010015 * the whole document * | 1-31 | G01S17/10 G01S17/42 ADD. G01S17/894 G01S17/931 |
| A | EP 3 557 284 A2 (SICK AG [DE]) 23 October 2019 (2019-10-23) * paragraph [0008] * | 1-31 | |
| A | EP 2 475 958 B1 (BOSCH GMBH ROBERT [DE]) 2 November 2016 (2016-11-02) * paragraphs [0012], [0024] * | 1-31 | **TECHNICAL FIELDS SEARCHED (IPC)** G01S |
| A | CA 3 085 648 A1 (ZAHNRADFABRIK FRIEDRICHSHAFEN [DE]; IBEO AUTOMOTIVE SYSTEMS GMBH [DE]) 20 June 2019 (2019-06-20) * pages 1, 2, 8 * | 1-31 | |
| A | WO 2018/140522 A2 (APPLE INC [US]) 2 August 2018 (2018-08-02) * paragraphs [0039], [0044] * | 1-31 | |
| A | WO 2020/131754 A2 (CAPTL LLC [US]) 25 June 2020 (2020-06-25) * paragraph [0115] * * paragraphs [0139] - [0141] * | 5,29 | |

The present search report has been drawn up for all claims

| Place of search | Date of completion of the search | Examiner |
|---|---|---|
| Munich | 29 November 2024 | Hirsch, Stefanie |

CATEGORY OF CITED DOCUMENTS

X : particularly relevant if taken alone
Y : particularly relevant if combined with another
document of the same category
A : technological background
O : non-written disclosure
P : intermediate document

T : theory or principle underlying the invention
E : earlier patent document, but published on, or
after the filing date
D : document cited in the application
L : document cited for other reasons

................................................................
& : member of the same patent family, corresponding
document

EPO FORM 1503 03.82 (P04C01)

## ANNEX TO THE EUROPEAN SEARCH REPORT
## ON EUROPEAN PATENT APPLICATION NO.

EP 24 18 4090

This annex lists the patent family members relating to the patent documents cited in the above-mentioned European search report.
The members are as contained in the European Patent Office EDP file on
The European Patent Office is in no way liable for these particulars which are merely given for the purpose of information.

29-11-2024

| Patent document cited in search report | | Publication date | Patent family member(s) | | Publication date |
|---|---|---|---|---|---|
| EP 2998700 | A1 | 23-03-2016 | CN | 105445748 A | 30-03-2016 |
| | | | EP | 2998700 A1 | 23-03-2016 |
| | | | US | 2016084651 A1 | 24-03-2016 |
| EP 3557284 | A2 | 23-10-2019 | DE | 102018109544 A1 | 24-10-2019 |
| | | | EP | 3557284 A2 | 23-10-2019 |
| | | | JP | 2019215324 A | 19-12-2019 |
| | | | US | 2019324143 A1 | 24-10-2019 |
| EP 2475958 | B1 | 02-11-2016 | CN | 102549381 A | 04-07-2012 |
| | | | CN | 105066953 A | 18-11-2015 |
| | | | DE | 102009029372 A1 | 24-03-2011 |
| | | | EP | 2475958 A1 | 18-07-2012 |
| | | | EP | 3130889 A1 | 15-02-2017 |
| | | | EP | 3130890 A1 | 15-02-2017 |
| | | | ES | 2614108 T3 | 29-05-2017 |
| | | | US | 2012249998 A1 | 04-10-2012 |
| | | | WO | 2011029645 A1 | 17-03-2011 |
| CA 3085648 | A1 | 20-06-2019 | CA | 3085648 A1 | 20-06-2019 |
| | | | CN | 111656219 A | 11-09-2020 |
| | | | DE | 102017222974 A1 | 19-06-2019 |
| | | | EP | 3724682 A1 | 21-10-2020 |
| | | | IL | 275402 A | 30-07-2020 |
| | | | JP | 2021507263 A | 22-02-2021 |
| | | | KR | 20210002445 A | 08-01-2021 |
| | | | US | 2021165079 A1 | 03-06-2021 |
| | | | WO | 2019115184 A1 | 20-06-2019 |
| WO 2018140522 | A2 | 02-08-2018 | CN | 110235024 A | 13-09-2019 |
| | | | EP | 3574344 A2 | 04-12-2019 |
| | | | JP | 6799690 B2 | 16-12-2020 |
| | | | JP | 2020505602 A | 20-02-2020 |
| | | | US | 2018209846 A1 | 26-07-2018 |
| | | | WO | 2018140522 A2 | 02-08-2018 |
| WO 2020131754 | A2 | 25-06-2020 | US | 2022057317 A1 | 24-02-2022 |
| | | | WO | 2020131754 A2 | 25-06-2020 |

For more details about this annex : see Official Journal of the European Patent Office, No. 12/82